(19) Europäisches Patentamt / European Patent Office / Office européen des brevets

(11) **EP 4 708 391 A1**

(12) **EUROPEAN PATENT APPLICATION**
published in accordance with Art. 153(4) EPC

(43) Date of publication:
**11.03.2026 Bulletin 2026/11**

(21) Application number: **24908187.8**

(22) Date of filing: **20.12.2024**

(51) International Patent Classification (IPC):
**H01M 4/36** (2006.01)   **H01M 4/525** (2010.01)
**H01M 4/505** (2010.01)   **H01M 4/48** (2010.01)
**H01M 4/38** (2006.01)   **H01M 4/587** (2010.01)
**H01M 4/62** (2006.01)   **H01M 4/139** (2010.01)
**H01M 10/052** (2010.01)

(52) Cooperative Patent Classification (CPC):
**H01M 4/52; H01M 4/364; H01M 4/366;**
**H01M 4/386; H01M 4/525; H01M 10/052;**
**H01M 10/0525;** H01M 2004/021; H01M 2004/027;
H01M 2004/028; Y02E 60/10

(86) International application number:
**PCT/KR2024/020868**

(87) International publication number:
**WO 2025/135905 (26.06.2025 Gazette 2025/26)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority:   **21.12.2023   KR 20230188944**
**30.10.2024   KR 20240151590**

(71) Applicant: **LG Energy Solution, Ltd.**
**Seoul 07335 (KR)**

(72) Inventors:
• **BAEK, So Ra**
**Daejeon 34122 (KR)**
• **JU, Ji Young**
**Daejeon 34122 (KR)**
• **CHO, Hyeon Jin**
**Daejeon 34122 (KR)**
• **YOO, Dong Wan**
**Daejeon 34122 (KR)**
• **JO, Chi Ho**
**Daejeon 34122 (KR)**

(74) Representative: **Hoffmann Eitle**
**Patent- und Rechtsanwälte PartmbB**
**Arabellastraße 30**
**81925 München (DE)**

(54) **LITHIUM SECONDARY BATTERY AND MANUFACTURING METHOD THEREFOR**

(57)   A lithium secondary battery includes: a positive electrode; a negative electrode; an electrolyte; and a separator. The positive electrode includes first and second positive electrode active materials having different average particle diameters ($D_{30}$). The average particle diameter ($D_{50}$) of the first positive electrode active material is larger than that of the second positive electrode active material. The first and second positive electrode active materials include single-particle type particles. The negative electrode includes a silicon-based negative electrode active material, and the lithium secondary battery has an IRF value of 1 to 1.4, defined by Equation 1 below.

$$[\text{Equation 1}]$$

$$IRF = \frac{R_p}{R_n}.$$

In the Equation 1, each variable is the same as described above in this specification.

**(Cont. next page)**

[FIG. 1]

MIXING FIRST POSITIVE ELECTRODE ACTIVE MATERIAL IN DISTILLED WATER TO PERFORM FIRST RINSING, FOLLOWED BY DRYING — S1

↓

MIXING SECOND POSITIVE ELECTRODE ACTIVE MATERIAL IN DISTILLED WATER TO PERFORM SECOND RINSING, FOLLOWED BY DRYING — S2

↓

APPLYING POSITIVE ELECTRODE SLURRY INCLUDING FIRST AND SECOND POSITIVE ELECTRODE ACTIVE MATERIALS ONTO POSITIVE ELECTRODE COLLECTOR TO MANUFACTURE POSITIVE ELECTRODE — S3

↓

MANUFACTURING NEGATIVE ELECTRODE INCLUDING SILICON-BASED NEGATIVE ELECTRODE ACTIVE MATERIAL — S4

↓

MANUFACTURING LITHIUM SECONDARY BATTERY INCLUDING POSITIVE ELECTRODE, NEGATIVE ELECTRODE, ELECTROLYTE, AND SEPARATOR — S5

**Description**

## TECHNICAL FIELD

## Cross-reference to Related Applications

This application claims the benefit of Korean Patent Application No. 10-2023-0188944, filed on December 21, 2023, and Korean Patent Application No. 10-2024-0151590, filed on October 30, 2024, in the Korean Intellectual Property Office, the disclosure of which is incorporated herein in its entirety by reference.

## TECHNICAL FIELD

The present invention relates to a lithium secondary battery and a method for manufacturing the same, and more particularly, to a lithium secondary battery having improved capacity, resistance characteristics, and life characteristics, for example, high-temperature life characteristics, and a method for manufacturing the same.

## BACKGROUND ART

In recent years, with the rapid proliferation of electronic devices using batteries such as mobile phones, notebook computers, and electric vehicles, the demand for small, lightweight, and relatively high-capacity secondary batteries has rapidly increased. For example, lithium secondary batteries are gaining attention as a power source for mobile devices due to their light weight and high energy density. Thus, many researches and developments are progressing to improve the performance of lithium secondary batteries.

## DISCLOSURE OF THE INVENTION

## TECHNICAL PROBLEM

The present disclosure, provides a lithium secondary battery, which adopts a low-efficiency positive electrode material that may resolve the shortcoming of a silicon-based negative electrode active material suffering from a high irreversible capacity loss during initial charge/discharge, to achieve superior capacity characteristics and excellent life characteristics, for example, high-temperature life characteristics, and a manufacturing method thereof.

## TECHNICAL SOLUTION

[1] The present invention provides a lithium secondary battery including: a positive electrode; a negative electrode; a separator disposed between the positive electrode and the negative electrode; and an electrolyte, wherein the positive electrode includes a first positive electrode active material and a second positive electrode active material having different average particle diameters from each other. The average particle diameter ($D_{50}$) of the first positive electrode active material is larger than the average particle diameter ($D_{50}$) of the second positive electrode active material, the first positive electrode active material and the second positive electrode active material include single-particle type particles, the negative electrode includes a silicon-based negative electrode active material, and the lithium secondary battery has an interfacial resistance factor (IRF) value of 1 to 1.4, defined by Equation 1 below:

$$[\text{Equation 1}]$$

$$IRF = \frac{R_p}{R_n}$$

in Equation 1 above, $R_n[\Omega]$ refers to an interfacial resistance of the negative electrode measured after 100 cycles of charge/discharge are performed for the lithium secondary battery manufactured using the negative electrode, and $R_p$ [$\Omega$] refers to an interfacial resistance of the positive electrode measured after 100 cycles of charge/discharge are performed for the lithium secondary battery manufactured using the positive electrode.

[2] The present invention provides the lithium secondary battery according to [1] above, wherein the first positive electrode active material includes a first lithium transition metal oxide represented by Formula 1 below:

$$[\text{Formula 1}] \qquad Li_{1+a1}Ni_{x1}Co_{y1}Mn_{z1}Al_{w1}M^1_{v1}O_2$$

in Formula 1 above, $0 \leq a1 \leq 0.3$, $0.82 \leq x1 < 1.0$, $0 < y1 \leq 0.2$, $0 < z1 \leq 0.2$, $0 < w1 \leq 0.2$, $0 \leq v1 \leq 0.1$, and $M^1$ is one or more doping elements selected from the group consisting of W, Cu, Fe, V, Cr, Ti, Zr, Zn, Al, In, Ta, Y, In, La, Sr, Ga, Sc, Gd, Sm, Ca, Ce, Nb, Mg, B, and Mo.

[3] The present invention provides the lithium secondary battery according to [1] or [2] above, wherein the second positive electrode active material includes a second lithium transition metal oxide represented by Formula 2 below:

$$[\text{Formula 2}] \qquad Li_{1+a2}Ni_{x2}Co_{y2}Mn_{z2}Al_{w2}M^2_{v2}O_2$$

in Formula 2 above, $0 \leq a2 \leq 0.3$, $0.82 \leq x2 < 1.0$, $0 < y2 \leq 0.2$, $0 < z2 \leq 0.2$, $0 < w2 \leq 0.2$, $0 \leq v2 \leq 0.1$, and $M^2$ is one or more doping elements selected from the group consisting of W, Cu, Fe, V, Cr, Ti, Zr, Zn, Al, In, Ta, Y, In, La, Sr, Ga, Sc, Gd, Sm, Ca, Ce, Nb, Mg, B, and Mo.

[4] The present invention provides the lithium secondary battery according to at least one of [1] to [3] above, wherein $R_n$ is 0.6 $\Omega$ or less.

[5] The present invention provides the lithium secondary battery according to at least one of [1] to [4] above, wherein the average particle diameter ($D_{50}$) of the first positive electrode active material is 6 $\mu$m to 12 $\mu$m.

[6] The present invention provides the lithium secondary battery according to at least one of [1] to [5] above, wherein the average particle diameter ($D_{50}$) of the second positive electrode active material is 1.5 $\mu$m to 5 $\mu$m.

[7] The present invention provides the lithium secondary battery according to at least one of [1] to [6] above, wherein the first positive electrode active material includes a first lithium transition metal oxide and a first coating layer disposed on a surface of particles of the first lithium transition metal oxide and including 1.5 mol% to 5 mol% cobalt (Co).

[8] The present invention provides the lithium secondary battery according to at least one of [1] to [7] above, wherein the second positive electrode active material includes a second lithium transition metal oxide and a second coating layer disposed on a surface of particles of the second lithium transition metal oxide and including 0.2 mol% to 2.5 mol% cobalt (Co).

[9] The present invention provides the lithium secondary battery according to at least one of [1] to [8] above, wherein the first positive electrode active material includes a first lithium transition metal oxide and a first coating layer including cobalt (Co) on a surface of particles of the first lithium transition metal oxide, the second positive electrode active material includes a second lithium transition metal oxide and a second coating layer including cobalt (Co) on a surface of particles of the second lithium transition metal oxide, and the first coating layer includes a larger amount of cobalt than that in the second coating layer.

[10] The present invention provides the lithium secondary battery according to at least one of [1] to [9] above, wherein the first positive electrode active material and the second positive electrode active material are included in a weight ratio of 80:20 to 40:60.

[11] The present invention provides the lithium secondary battery according to at least one of [1] to [10] above, wherein the negative electrode includes a carbon-based negative electrode active material, and the silicon-based negative electrode active material and the carbon-based negative electrode active material are included in a weight ratio of 1:99 to 30:70.

[12] The present invention provides, a method of manufacturing a lithium secondary battery including: mixing a first positive electrode active material in distilled water to perform a first rinsing, followed by a drying (S1); mixing a second positive electrode active material in distilled water to perform a second rinsing, followed by a drying (S2); applying a positive electrode slurry including the first positive electrode active material and the second positive electrode active material onto a positive electrode collector to manufacture a positive electrode (S3); manufacturing a negative electrode including a silicon-based negative electrode active material (S4); and manufacturing a lithium secondary battery including the positive electrode, the negative electrode, and an electrolyte (S5), wherein the first rinsing is performed at a higher temperature than that for the second rinsing, the average article diameter ($D_{50}$) of the first positive electrode active material is larger than that of the second positive electrode active material, the first positive electrode active material and the second positive electrode active material include single-particle type particles, and the lithium secondary battery has an interfacial resistance factor (IRF) value of 1 to 1.4, defined by Equation 1 below:

[Equation 1]

$$IRF = \frac{R_p}{R_n}$$

in Equation 1 above, $R_n[\Omega]$ refers to an interfacial resistance of the negative electrode measured after 100 cycles of charge/discharge are performed for the lithium secondary battery manufactured using the negative electrode, and $R_p$ [$\Omega$] refers to an interfacial resistance of the positive electrode measured after 100 cycles of charge/discharge are performed for the lithium secondary battery manufactured using the positive electrode.

[13] The present invention provides the method of manufacturing a lithium secondary battery according to [12] above, wherein the first rinsing is performed at 20 °C to 40 °C.

[14] The present invention provides the method of manufacturing a lithium secondary battery according to [12] or [13] above, wherein, the second rinsing is performed at 3 °C to 18 °C.

[15] The present invention provides the method of manufacturing a lithium secondary battery according to at least one of [12] to [14] above, wherein the first rinsing is performed by mixing the first positive electrode active material in distilled water in an amount of 50 wt% to 70 wt% based on a total weight of the distilled water.

[16] The present invention provides the method of manufacturing a lithium secondary battery according to at least one of [12] to [15] above, wherein the second rinsing is performed by mixing the second positive electrode active material in distilled water in an amount of 65 wt% to 85 wt% based on a total weight of the distilled water.

## ADVANTAGEOUS EFFECTS

According to the present disclosure, a silicon-based negative electrode active material is included to achieve the superior capacity characteristics, and a positive electrode active material including single-particle type particles is used to reduce the efficiency of the positive electrode, so that it is possible to prevent or suppress the occurrence of the reversible capacity loss of the positive electrode caused from the irreversible capacity of the silicon-based negative electrode active material. Simultaneously, the ratio between the interfacial resistance of the positive electrode and the interfacial resistance of the negative electrode is adjusted to an appropriate range, so that it is possible to balance the resistance between the positive electrode and the negative electrode at the end of discharge, and consequently, improve the life characteristics of the battery, for example, the high-temperature life characteristics. Further, the lithium secondary battery according to the present disclosure includes the positive electrode active material having a bimodal particle size distribution, so that the high energy density may be implemented, and the capacity characteristics may be more enhanced.

## BRIEF DESCRIPTION OF THE DRAWINGS

Since the drawings attached herewith illustrate embodiments of the present disclosure and serve to facilitate the understanding of the technical idea of the present disclosure in conjunction with the detailed description of the invention herein below, the present disclosure should not be construed as being limited to the matters illustrated in the drawings.

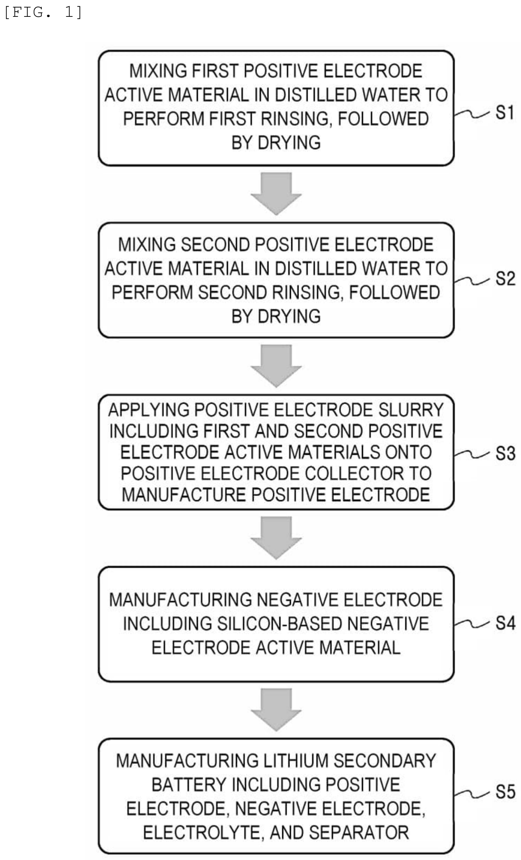

FIG 1 is a flowchart illustrating a manufacturing method of a lithium secondary battery according to an embodiment of the present disclosure.

## BEST MDOE FOR CARRYING OUT THE INVENTION

Hereinafter, the present invention will be described in more detail.
Words and terms used in the detailed description and the claims herein should not be interpreted to be limited to their usual or dictionary meanings, but should be interpreted to have meanings and concepts that correspond to the technical idea of the present disclosure in compliance with the principle that inventors may appropriately define terms and concepts for the purpose of best describing the present disclosure.
Terms used herein merely describe the embodiments of the present disclosure, and are not intended to limit the present disclosure. In the descriptions herein, a singular word includes the plural unless otherwise defined.
In the descriptions herein, terms such as "include," "comprise," and "have" are used to designate the presence of features, numerals, steps, components, and combinations thereof described herein, but should not be interpreted to exclude the presence or possible addition of one or more other features, numerals, steps, components, and combinations thereof.
As used herein, the term "single particle type particle" indicates a particle formed by aggregation of 30 or fewer sub-particles. Each "sub-particle" unit constituting the single particle type particles is referred to as a "nodule". The single particle type particle includes "single particle" formed of a single nodule, and "quasi-single particle" is a composite formed of 2 to 30 nodules.

As used herein, the term "nodule" indicates a sub-particle unit body constituting a single particle and a quasi-single particle, wherein the nodule may be a single crystal lacking any crystalline grain boundaries, or may be a polycrystal in which grain boundaries are not present when observed in a field of view of $5000\times$ to $20000\times$ using a scanning electron microscope (SEM).

As used herein, the term "secondary particle" indicates a particle formed by aggregation of more than 30 sub-particles. To distinguish the sub-particle constituting the single particle type particle above, each sub-particle unit constituting the secondary particle is referred to as a "primary particle".

In the present disclosure, the "particle" may include any one or all of the single particle, the quasi-single particle, the primary particle, the nodule, and the secondary particle.

In the present disclosure, an "average particle diameter $D_{50}$" refers to a particle size based on 50% of the volume cumulative particle size distribution of positive electrode active material powder, and may be measured using a laser diffraction method. For example, the average particle diameter $D_{50}$ may be measured by dispersing the positive electrode active material powder in a dispersion medium, introducing the obtained slurry into a commercially available laser diffraction particle size measurement device (e.g., Microtrac MT 3000), irradiating the slurry with an ultrasonic wave of about 28 kHz at an output power of 60 W to obtain a volume cumulative particle size distribution graph, and calculating a particle size corresponding to 50% of the volume cumulative amount.

In the present disclosure, the "interfacial resistance $R_p$ of the positive electrode" may be measured using the Biologic VMP3 device (100 kHz to 10 mHz, 25 °C) for each lithium secondary battery according to the present disclosure, which is manufactured to include a negative electrode, a positive electrode, and an electrolyte, cycled for 100 cycles each in which charging is performed at 25 °C under conditions of CC (constant current)/CV (constant voltage), 0.1C, 4.2V, 0.05C cut, and discharging is performed under conditions of CC, 0.1C, 3.0V, and thereafter, charged to the state of charge (SOC) 50% or SOC 10%. The electrolyte may be prepared by dissolving 1.0 M of $LiPF_6$ in an organic solvent obtained by mixing ethylene carbonate (EC):ethyl methyl carbonate (EMC) at a volume ratio of 3:7.

In the present disclosure, the "interfacial resistance $R_n$ of the negative electrode" may be measured using the Biologic VMP3 device (100 kHz to 10 mHz, 25 °C) for each lithium secondary battery according to the present disclosure, which is manufactured to include a negative electrode, a positive electrode, and an electrolyte, cycled for 100 cycles each in which charging is performed at 25 °C under conditions of CC/CV, 0.1 C, 0.05 V, 0.05 C cut, and discharging is performed under conditions of CC, 0.1 C, 1.5 V, and thereafter, charged to SOC 50 % or SOC 10 %. The electrolyte may be prepared by dissolving 1.0 M of $LiPF_6$ in an organic solvent obtained by mixing ethylene carbonate (EC):ethyl methyl carbonate (EMC) at a volume ratio of 3:7.

Typically, carbon-based materials such as graphite are used as the negative electrode material of lithium secondary batteries. However, the carbon-based materials have the drawback of a low capacity per unit mass, which makes it difficult to achieve the high capacity in lithium secondary batteries. Accordingly, as non-carbon-based negative electrode materials exhibiting the higher capacity than the carbon-based materials, materials, such as silicon, tin, and oxides thereof, which form an inter-metallic compound with lithium, are being developed and used. However, these negative electrode materials suffer from a drastic irreversible capacity loss during the initial charge/discharge.

Under the circumstances, methods have been researched and proposed to compensate for the irreversible capacity loss of the negative electrode, by using materials that may serve as a lithium ion supply source or storage and become electrochemically active after a first cycle without degrading the performance of a battery itself, as the positive electrode material. For example, there is a method using lithium nickel-based oxides such as $Li_2NiO_2$ as a sacrificial positive electrode material or an over-discharge inhibitor for the positive electrode.

However, most lithium nickel-based oxides are expensive, and generate a large amount of lithium by-products, which causes the problem of increasing the generation amount of gas. Thus, the present disclosure provides a lithium secondary battery, which uses a positive electrode active material including single-particle type particles to achieve not only the superior capacity characteristics but also the excellent life characteristics, for example, high-temperature life characteristics, and a manufacturing method thereof.

Hereinafter, the present invention will be described in detail.

A lithium secondary battery and a manufacturing method thereof according to the present disclosure may include at least one of the components described herein below, and may include any combination of components, which is technically feasible, among the components described herein below.

In order to develop a high-capacity cell, the silicon-based negative electrode material with the high capacity may be used, but the silicon-based negative electrode material has the drawback of low charge/discharge efficiency, which leads to a high lithium ion loss rate caused by the irreversible reaction. Therefore, as the charge/discharge are repeated, the loss of lithium in the positive electrode active material increases, which may rapidly decrease the capacity of the battery during the charge/discharge, and result in a collapse of the positive electrode active material structure.

When the positive electrode active material including single-particle type particles is used, the efficiency of the positive electrode may be reduced during the initial charge/discharge, and as a result, the loss of the reversible capacity of the positive electrode caused from the irreversible capacity of the silicon-based negative electrode active material may be suppressed.

However, the lithium diffusion pathway becomes long, as compared to the case of using a lithium nickel-based oxide in a secondary particle form using the positive electrode active material including single-particle type particles, and therefore, the mobility of the lithium ions decreases, resulting in the increase of the initial resistance. Accordingly, the positive electrode resistance may be reduced, but in this case, the resistance between the positive electrode and the negative electrode becomes unbalanced, which may degrade the cycle characteristics of a battery.

Therefore, the present invention provides a lithium secondary battery, which may prevent or suppress the lithium ion loss of the positive electrode active material caused from the irreversible reaction of the silicon-based negative electrode active material, and therefore, achieve the superior capacity characteristics and life characteristics. Specifically, the present invention provides a lithium secondary battery implementing the high energy density and achieving the superior capacity characteristics and the excellent life characteristics such as, for example, the high-temperature life characteristics, by appropriately adjusting the ratio between the interfacial resistance of the positive electrode and the interfacial resistance of the negative electrode, and adjusting the interfacial resistance of a positive electrode to a specific range while using a positive electrode active material, which is a single-particle type particle having a bimodal particle size distribution, together with a silicon-based negative electrode active material.

Hereinafter, the present invention will be described in detail.

**Lithium Secondary Battery**

According to the present disclosure, a lithium secondary battery includes: a positive electrode; a negative electrode; a separator disposed between the positive electrode and the negative electrode; and an electrolyte. The positive electrode includes a first positive electrode active material and a second positive electrode active material having different average particle diameters. The average particle diameter ($D_{50}$) of the first positive electrode active material is larger than the average particle diameter ($D_{50}$ of the second positive electrode active material. The first positive electrode active material and the second positive electrode active material include single-particle type particles. The negative electrode includes a silicon-based negative electrode active material. The lithium secondary battery has an interfacial resistance factor (IRF) value of 1 to 1.4, defined by Equation 1 below:

$$[\text{Equation 1}]$$

$$IRF = \frac{R_p}{R_n}$$

in Equation 1 above, $R_n[\Omega]$ refers to an interfacial resistance of the negative electrode measured after 100 cycles of charge/discharge are performed for the lithium secondary battery manufactured using the negative electrode, and $R_p[\Omega]$ refers to an interfacial resistance of the positive electrode measured after 100 cycles of charge/discharge are performed for the lithium secondary battery manufactured using the positive electrode.

The IRF value is 1 to 1.4. Specifically, the IRF value may be 1 or more, 1.02 or more, 1.04 or more, 1.06 or more, 1.08 or more, 1.1 or more, 1.12 or more, 1.14 or more, 1.16 or more, or 1.18 or more, and may be 1.4 or less, 1.38 or less, 1.36 or less, 1.34 or less, 1.3 or less, 1.28 or less, 1.26 or less, 1.24 or less, 1.22 or less, or 1.2 or less. For example, the IRF value may be 1 to 1.4, 1.08 to 1.3, or 1.12 to 1.24.

When the positive electrode active material including single-particle type particles is used, the efficiency of the positive electrode during the initial charge/discharge may be reduced, but the mobility of lithium may decrease. Accordingly, when the interfacial resistance of the positive electrode is reduced, the decrease in mobility of lithium may be suppressed, but a resistance difference occurs between the positive electrode and the negative electrode, which may intensively deteriorate the negative electrode with the relatively high resistance.

Therefore, in the lithium secondary battery according to the present disclosure, the ratio between the interfacial resistance of the positive electrode and the interfacial resistance of the negative electrode may be adjusted to an appropriate range according to Equation 1 above to reduce the resistance difference between the positive electrode and the negative electrode, so that the deterioration of the negative electrode may be suppressed during the charge/discharge cycles, and therefore, the life characteristics of the battery may be improved.

The lithium secondary battery may include a positive electrode; a negative electrode; a separator disposed between the positive electrode and the negative electrode; and an electrolyte, and according to an embodiment, may include an electrode assembly including a positive electrode, a negative electrode, and a separator; an electrolyte; and a battery case.

Hereinafter, each component of the lithium secondary battery according to the present disclosure is described in detail.

**(1) Electrode Assembly**

An electrode assembly according to the present disclosure includes a positive electrode, and a negative electrode, and specifically, may include a positive electrode, a negative electrode, and a separator disposed between the positive electrode and the negative electrode.

Specifically, the electrode assembly may be formed by sequentially stacking the positive electrode, the separator, and the negative electrode, and the positive electrode and the negative electrode may be insulated from each other by the separator.

The electrode assembly may be any of various types of electrode assemblies well-known in the art, such as a jelly-roll type, a stack type, a stack-and-lamination type, and a stack-and-folding type, and the type of the electrode assembly is not particularly limited.

The jelly-roll type electrode assembly may be fabricated in the manner that a sheet-shaped positive electrode, a sheet-shaped negative electrode, and a sheet-shaped separator interposed therebetween are wound together in one direction.

The stack type electrode assembly may be fabricated by cutting a positive electrode, a separator, and a negative electrode into a desired shape, and then, sequentially stacking the cut positive electrode/separator/negative electrode.

The stack-and-lamination type electrode assembly may be fabricated by stacking positive electrodes, separators, and negative electrodes to form a plurality of unit cells, stacking the plurality of unit cells while interposing separators therebetween, and then, laminating the stacked unit cells through, for example, heating.

The stack-and-folding type electrode assembly may be fabricated by stacking positive electrodes, separators, and negative electrodes to form a plurality of unit cells, disposing the plurality of unit cells on one or both sides of an elongated folding separator, and then, winding the folding separator.

Hereinafter, each component of the electrode assembly according to the present disclosure is described in detail.

**1) Positive Electrode**

The positive electrode may include a positive electrode active material layer, and according to an embodiment, may include a positive electrode collector; and a positive electrode active material layer disposed on the positive electrode collector.

As the positive electrode collector, any of various positive electrode collectors well-known in the art may be used. For example, a stainless steel, aluminum, nickel, titanium, calcined carbon, or aluminum or a stainless steel with its surface processed with carbon, nickel, titanium, silver or the like may be used as the positive electrode collector. The positive electrode collector may typically have a thickness of about 3 $\mu$m to 500 $\mu$m, and may include fine irregularities on its surface to enhance the adhesion of the positive electrode active material. The positive electrode collector may be used in various forms such as a film, a sheet, a foil, a net, a porous material, a foam, and a nonwoven.

The positive electrode active material layer may be disposed on the positive electrode collector, and specifically, may be disposed on one or both sides of the positive electrode collector. The positive electrode active material layer may have a single-layer structure or a multilayer structure including two or more layers.

The positive electrode active material layer includes a first positive electrode active material and a second positive electrode active material.

The first positive electrode active material and the second positive electrode active material have different average particle diameters $D_{50}$, and specifically, the average particle diameter $D_{50}$ of the first positive electrode active material is larger than the average particle diameter $D_{50}$ of the second positive electrode active material. Accordingly, during the rolling of the electrodes, the second positive electrode active material with the small particle size is filled into voids of the first positive electrode active material with the large particle size, so that the electrode density increases, and the high energy density may be implemented, which may achieve the high capacity characteristics.

The first positive electrode active material includes single-particle type particles. When the first positive electrode active material includes the single-particle type particles, the lithium diffusion distance is long due to the large particle size of the single-particle type particles, and therefore, the diffusion resistance increases, which may reduce the efficiency of the positive electrode. As a result, the efficiency balance with the negative electrode may be achieved when the silicon-based negative electrode active material is applied. Thus, it is possible to suppress the loss of lithium ions caused from the irreversible capacity when the silicon-based negative electrode active material is applied, and it is also possible to prevent or suppress the occurrence of a phenomenon of lithium precipitation on the surface of the negative electrode, so that the life characteristics of the lithium secondary battery using the positive electrode according to the present disclosure may be improved. Further, when the first positive electrode active material including the single-particle type particles is applied unlike the case of using a conventional sacrificial positive electrode material, it is possible to prevent or suppress the generation of lithium by-products resulting from the use of the sacrificial positive electrode material during the charge/-discharge, so that the superior high-temperature storage characteristics and the superior high-temperature life characteristics may be achieved.

The first positive electrode active material may include a first lithium transition metal oxide including nickel (Ni), cobalt (Co), manganese (Mn), and aluminum (Al). Unlike a ternary lithium transition metal oxide including nickel, cobalt, and manganese, the first positive electrode active material according to the present disclosure further includes aluminum having the strong bonding force with oxygen atoms to have the stable structure, and therefore, may be electrochemically stable at high potentials by inhibiting the cation mixing during the charge/discharge, so that the thermal stability and the capacity characteristics may be further improved.

The first positive electrode active material may include the first lithium transition metal oxide including 82 mol% or more nickel among the total metals excluding lithium. In this case, the high capacity characteristics of the lithium secondary battery may be implemented.

The first positive electrode active material may include the first lithium transition metal oxide represented by Formula 1 below.

$$\text{[Formula 1]} \qquad Li_{1+a1}Ni_{x1}Co_{y1}Mn_{z1}Al_{w1}M^1_{v1}O_2$$

In Formula 1 above, $M^1$ may be one or more doping elements selected from the group consisting of W, Cu, Fe, V, Cr, Ti, Zr, Zn, In, Ta, Y, La, Sr, Ga, Sc, Gd, Sm, Ca, Ce, Nb, Mg, B, and Mo, or may be one or more doping elements selected from W, Y, Ba, Ca, Ti, Mg, Ta, and Nb.

The "1+a1" may refer to a molar ratio of lithium (Li) in the first lithium transition metal oxide, and the "a1" may meet $0 \leq a1 \leq 0.3$, $0 \leq a1 \leq 0.2$, $0 \leq a1 \leq 0.15$, or $0 \leq a1 \leq 0.1$. When the range above is satisfied, it is possible to achieve the remarkable effect of improving the capacity characteristics of the first positive electrode active material by controlling the Li content, and the balance between the sintering and the calcination when preparing the first positive electrode active material.

The "x1" may refer to a molar ratio of nickel among the total metals excluding lithium in the first lithium transition metal oxide, and may meet $0.82 \leq x1 < 1$, $0.85 \leq x1 < 1$, $0.90 \leq x1 < 1$, or $0.92 \leq x1 < 1$. When this range is satisfied, a sufficient content of nickel to contribute to the charge/discharge is obtained in the lithium transition metal oxide, so that the high capacity may be achieved.

The "y1" may refer to a molar ratio of cobalt among the total metals excluding lithium in the first lithium transition metal oxide, and may meet $0 < y1 \leq 0.2$, $0 < y1 \leq -0.18$, $0.01 \leq y1 \leq 0.15$, $0.03 \leq y1 \leq 0.12$, or $0.05 \leq y1 \leq 0.10$. When this range is satisfied, costs may be reduced due to the small content of cobalt, and simultaneously, good resistance characteristics and output characteristics may be implemented.

The "z1" may refer to a molar ratio of Mn among the total metals excluding lithium in the first lithium transition metal oxide, and may meet $0 < z1 \leq 0.2$, $0 < z1 \leq 0.18$, $0.01 \leq z1 \leq 0.15$, or $0.03 \leq z1 \leq 0.10$. When this range is satisfied, the structural stability of the lithium transition metal oxide may be improved.

The "w1" may refer to a molar ratio of Al among the total metals excluding lithium in the first lithium transition metal oxide, and may meet $0 < w1 \leq 0.2$, $0 < w1 \leq 0.18$, $0.01 \leq w1 \leq 0.15$, or $0.03 \leq w1 \leq 0.10$. When this range is satisfied, the thermal stability of the lithium transition metal oxide may be improved due to the strong bonding force with oxygen.

The "v1" may refer to a molar ratio of $M^1$ among the total metals excluding lithium in the first lithium transition metal oxide, and may meet $0 \leq v1 \leq 0.1$, $0 \leq v1 \leq 0.08$, or $0 \leq v1 \leq 0.05$.

The first positive electrode active material may include the first lithium transition metal oxide and a first coating layer disposed on the surface of the first lithium transition metal oxide particles, and the first coating layer may include cobalt (Co). By the first coating layer, the contact between the lithium transition metal oxide and the electrolyte is blocked, thereby suppressing the occurrence of electrolyte side reactions, so that the degradation of the surface structure of the lithium transition metal oxide, which may occur during the charge/discharge process, may be prevented, and as a result, the resistance increase may be suppressed, and the high-temperature life characteristics may be improved.

The first coating layer may include 1.5 mol% to 5 mol%, 2 mol% to 4.5 mol%, 2.3 mol% to 4 mol%, 2.5 mol% to 3.5 mol%, or 2.7 mol% to 3.3 mol% of cobalt (Co). When the first coating layer includes cobalt in this range, the content of cobalt is larger than that in a second coating layer included in the second positive electrode active material, which is described herein later, so that the interfacial resistance of the positive electrode may be reduced at SOC 50 % of the lithium secondary battery including the positive electrode according to the present disclosure. Therefore, it is possible to suppress the increase of the initial resistance during the charge/discharge, resulting from the decrease in ion mobility, when the positive electrode active material including single-particle type particles is used, so that the life characteristics and the high-temperature life characteristics of the battery may be improved.

The first coating layer may be formed on the entire surface or a portion of the surface of the first lithium transition metal oxide particles. Specifically, when the first coating layer is formed on a portion of the surface of the first lithium transition metal oxide particles, the first coating layer may be formed on the area of 5% or more but less than 100%, or 20% or more but less than 100% in the entire surface area of the surface of the first lithium transition metal oxide.

The average particle diameter $D_{50}$ of the first positive electrode active material may be 6 $\mu$m to 12 $\mu$m. The average particle diameter of the first positive electrode active material may be 6 $\mu$m or more, 6.2 $\mu$m or more, 6.4 $\mu$m or more, 6.6 $\mu$m or more, 6.8 $\mu$m or more, 7 $\mu$m or more, 7.2 $\mu$m or more, 7.4 $\mu$m or more, 7.6 $\mu$m or more, 7.8 $\mu$m or more, 8 $\mu$m or more, 8.2 $\mu$m or more, or 8.4 $\mu$m or more, and may be 12 $\mu$m or less, 11.8 $\mu$m or less, 11.6 $\mu$m or less, 11.4 $\mu$m or less, 11.2 $\mu$m or less, 11 $\mu$m or less, 10.8 $\mu$m or less, 10.6 $\mu$m or less, 10.4 $\mu$m or less, 10.2 $\mu$m or less, 10 $\mu$m or less, 9.8 $\mu$m or less, 9.6 $\mu$m or less, 9.4 $\mu$m or less, 9.2 $\mu$m or less, 9 $\mu$m or less, 8.8 $\mu$m or less, or 8.6 $\mu$m or less. For example, the average particle diameter of the first positive electrode active material may be 6 $\mu$m to 12 $\mu$m, 7.4 $\mu$m to 11 um, 8 $\mu$m to 9.6 um, or 8.2 $\mu$m to 9 $\mu$m. When this range is satisfied, the rolling density of the positive electrode material may be increased, and as a result, the electrode density may be improved when manufacturing the electrodes, so that the superior energy density may be implemented.

The first positive electrode active material may be included in a content of 20 wt% to 80 wt%, 30 wt% to 70 wt%, or 40 wt% to 60 wt% based on the total weight of the positive electrode active material layer. When this range is satisfied, the rolling density may be improved so that the high energy density may be implemented.

Meanwhile, the second positive electrode active material includes single-particle type particles. When the second positive electrode active material includes the single-particle type particles, the lithium diffusion distance is long due to the large particle size of the single-particle type particles, and therefore, the diffusion resistance increases, which may reduce the efficiency of the positive electrode. As a result, the efficiency balance with the negative electrode may be achieved when the silicon-based negative electrode active material is applied. Thus, it is possible to suppress the loss of lithium ions caused from the irreversible capacity when the silicon-based negative electrode active material is applied, and it is also possible to prevent or suppress the occurrence of a phenomenon of lithium precipitation on the surface of the negative electrode, so that the life characteristics of the lithium secondary battery using the positive electrode according to the present disclosure may be improved. Further, when the second positive electrode active material including the single-particle type particles is applied unlike the case of using a conventional sacrificial positive electrode material, it is possible to prevent or suppress the generation of lithium by-products resulting from the use of the sacrificial positive electrode material during the charge/discharge, so that the superior high-temperature storage characteristics and the superior high-temperature life characteristics may be achieved.

The second positive electrode active material may include a second lithium transition metal oxide including nickel (Ni), cobalt (Co), manganese (Mn), and aluminum (Al). Unlike a ternary lithium transition metal oxide including nickel, cobalt, and manganese, the second lithium transition metal oxide according to the present disclosure further includes aluminum having the strong bonding force with oxygen atoms to have the stable structure, and therefore, may be electrochemically stable at high potentials by inhibiting the cation mixing during the charge/discharge, so that the thermal stability and the capacity characteristics may be further improved.

The second positive electrode active material may include the second lithium transition metal oxide including 82 mol% or more nickel among the total metals excluding lithium. In this case, the high capacity characteristics of the lithium secondary battery may be implemented.

The second positive electrode active material may include the second lithium transition metal oxide represented by Formula 2 below.

$$[\text{Formula 2}] \quad Li_{1+a2}Ni_{x2}Co_{y2}Mn_{z2}Al_{w2}M^2_{v2}O_2$$

In Formula 2 above, $M^2$ may be one or more doping elements selected from the group consisting of W, Cu, Fe, V, Cr, Ti, Zr, Zn, In, Ta, Y, La, Sr, Ga, Sc, Gd, Sm, Ca, Ce, Nb, Mg, B, and Mo, or may be one or more doping elements selected from W, Y, Ba, Ca, Ti, Mg, Ta, and Nb.

The "1+a2" may refer to a molar ratio of lithium (Li) in the second lithium transition metal oxide, and the "a2" may meet $0 \leq a2 \leq 0.3$, $0 \leq a2 \leq 0.2$, $0 \leq a2 \leq 0.15$, or $0 \leq a2 \leq 0.1$. When the range above is satisfied, it is possible to achieve the remarkable effect of improving the capacity characteristics of the second positive electrode active material by controlling the Li content, and the balance between the sintering and the calcination when preparing the second positive electrode active material.

The "x2" may refer to a molar ratio of nickel among the total metals excluding lithium in the second lithium transition metal oxide, and may meet $0.82 \leq x2 < 1$, $0.85 \leq x2 < 1$, $0.90 \leq x2 < 1$, or $0.92 \leq x2 < 1$. When this range is satisfied, a sufficient content of nickel to contribute to the charge/discharge is obtained in the lithium transition metal oxide, so that the high capacity may be achieved.

The "y2" may refer to a molar ratio of cobalt among the total metals excluding lithium in the second lithium transition metal oxide, and may meet $0 < y2 \leq 0.2$, $0 < y2 \leq 0.18$, $0.01 \leq y2 \leq 0.15$, $0.03 \leq y2 \leq 0.12$, or $0.05 \leq y2 \leq 0.10$. When this range is satisfied, costs may be reduced due to the small content of cobalt, and simultaneously, good resistance characteristics and output characteristics may be implemented.

The "z2" may refer to a molar ratio of Mn among the total metals excluding lithium in the second lithium transition metal oxide, and may meet $0<z2\leq0.2$, $0<z2\leq0.18$, $0.01\leq z2\leq0.15$, or $0.03\leq z2\leq0.10$. When this range is satisfied, the structural stability of the lithium transition metal oxide may be improved.

The "w2" may refer to a molar ratio of Al among the total metals excluding lithium in the second lithium transition metal oxide, and may meet $0<w2\leq0.2$, $0<w2\leq0.18$, $0.01\leq w2\leq0.15$, or $0.03\leq w2\leq0.10$. When this range is satisfied, the thermal stability of the lithium transition metal oxide may be improved due to the strong bonding force with oxygen.

The "v2" may refer to a molar ratio of $M^2$ among the total metals excluding lithium in the second lithium transition metal oxide, and may meet $0\leq v2\leq0.1$, $0\leq v2\leq0.08$, or $0\leq v2\leq0.05$.

The second positive electrode active material may include the second lithium transition metal oxide and a second coating layer disposed on the surface of the second lithium transition metal oxide particles, and the second coating layer may include cobalt (Co). By the second coating layer, the contact between the lithium transition metal oxide and the electrolyte is blocked, thereby suppressing the occurrence of electrolyte side reactions, so that the degradation of the surface structure of the lithium transition metal oxide, which may occur during the charge/discharge process, may be prevented, and as a result, the resistance increase may be suppressed, and the high-temperature life characteristics may be improved.

The first coating layer described above may include a larger amount of cobalt than that in the second coating layer. In this case, the interfacial resistance of the positive electrode may be reduced at SOC 50 % of the lithium secondary battery including the positive electrode according to the present disclosure, which may suppress the increase in initial resistance during the charge/discharge caused from the decrease of ion mobility when the positive electrode active material including the single-particle type particles is used, so that the life characteristics and the high-temperature life characteristics of the battery may be improved.

The second coating layer may include 0.2 mol% to 2.5 mol%, 0.3 mol% to 2 mol%, 0.5 mol% to 1.5 mol%, or 0.7 mol% to 1.3 mol% of cobalt (Co). When the second coating layer includes cobalt in this range, the content of cobalt is smaller than that in the first coating layer included in the first positive electrode active material described above, so that the interfacial resistance of the positive electrode may be reduced at SOC 50 % of the lithium secondary battery including the positive electrode according to the present disclosure. Therefore, it is possible to suppress the increase in initial resistance during the charge/discharge caused from the decrease of ion mobility when the positive electrode active material including the single-particle type particles is used, so that the life characteristics and the high-temperature life characteristics of the battery may be improved, and the energy density may be improved.

The second coating layer may be formed on the entire surface or a portion of the surface of the second lithium transition metal oxide particles. Specifically, when the second coating layer is formed on a portion of the surface of the second lithium transition metal oxide particles, the second coating layer may be formed on the area of 5 % or more but less than 100 %, or preferably 20 % or more but less than 100 % in the entire surface area of the surface of the second lithium transition metal oxide.

The average particle diameter $D_{50}$ of the second positive electrode active material may be 1.5 μm to 5 μm. Specifically, the average particle diameter of the second positive electrode active material may be 1.5 μm or more, 1.7 μm or more, 1.9 μm or more, 2 μm or more, 2.2 μm or more, 2.4 μm or more, 2.6 μm or more, 2.8 μm or more, or 3 μm or more, and may be 5 μm or less, 4.8 μm or less, 4.6 μm or less, 4.4 μm or less, 4.2 μm or less, 4 μm or less, 3.8 μm or less, 3.6 μm or less, 3.4 μm or less, 3.2 μm or less. For example, the average particle diameter of the second positive electrode active material may be 1.5 μm to 5 μm, 2 μm to 4.5 μm, 2.6 μm to 4.2 μm, or 3 μm to 4 μm, or 3 μm to 3.4 μm. When this range is satisfied, the rolling density of the positive electrode material may be increased, and as a result, the electrode density may be improved when manufacturing the electrodes, so that the superior energy density may be implemented.

The second positive electrode active material may be included in a content of 20 wt% to 80 wt%, 30 wt% to 70 wt%, or 40 wt% to 60 wt% based on the total weight of the positive electrode active material layer. When this range is satisfied, the rolling density may be improved so that the high energy density may be implemented.

The first positive electrode active material and the second positive electrode active material may be included in a weight ratio of 80:20 to 40:60, 75:25 to 45:55, 70:30 to 50:50, or 65:45 to 55:45. When this weight ratio is satisfied, the energy density may be improved, and the high-temperature life characteristics and the resistance characteristics may be improved.

The positive electrode active material layer may selectively further include at least one of a positive electrode conductive agent and a positive electrode binder.

The positive electrode conductive agent is used to impart a conductivity to the electrode, and is not particularly limited as long as it has the electronic conductivity without causing chemical changes in the battery. According to an embodiment, the positive electrode conductive agent includes, for example, graphite such as natural graphite and artificial graphite; carbon-based materials such as carbon black, acetylene black, ketchen black, channel black, furnace black, lamp black, summer black, carbon fiber, and carbon nanotubes; metal powder or metal fiber such as a copper, nickel, aluminum, and silver; conductive whiskers such as zinc oxide and potassium titanate; conductive metal oxides such as titanium oxide; and conductive polymers such as polyphenylene derivatives, and one type alone or a mixture of two or more types thereof may be used. The positive electrode conductive agent may be typically included in a content of 1 wt% to 30 wt%, 1 wt% to 20 wt%, or preferably 1 wt% to 10 wt% based on the total weight of the positive electrode active material layer.

The positive electrode binder serves to enhance the adhesion among the positive electrode material particles and the bonding force between the positive electrode active material and the positive electrode collector. The positive electrode binder includes, for example, fluororesin-based binders including polyvinylidene fluoride (PVDF) and polytetrafluoroethylene (PTFE); rubber-based binders including styrene-butadiene rubber (SBR), acrylonitrile-butadiene rubber, and styrene-isoprene rubber; cellulose-based binders including carboxyl methyl cellulose (CMC), starch, hydroxypropyl cellulose, and regenerated cellulose; polyalcohol-based binders including polyvinyl alcohol; polyolefin-based binders including polyethylene and polypropylene; polyimide-based binders; polyester-based binders; and silane-based binders, and one type alone or a mixture of two or more types thereof may be used. The positive electrode binder may be included in a content of 1 wt% to 30 wt%, 1 wt% to 20 wt%, or 1 wt% to 10 wt% based on the total weight of the positive electrode active material layer.

The positive electrode may be manufactured by applying a positive electrode slurry onto one or both sides of the positive electrode collector with an elongated sheet shape, removing the solvent of the positive electrode slurry through a drying process, and then, rolling the sheet. Meanwhile, when applying the positive electrode slurry, the positive electrode slurry may not be applied to a portion of the positive electrode collector, for example, one end portion of the positive electrode collector, to manufacture the positive electrode including an uncoated portion.

The positive electrode slurry may be prepared by dispersing the first positive electrode active material and the second positive electrode active material according to the present disclosure in a solvent such as dimethyl sulfoxide (DMSO), isopropyl alcohol, N-methylpyrrolidone (NMP), acetone, or water.

In the positive electrode, $R_p$ is 0.85 $\Omega$ or less. Specifically, $R_p$ may be 0.85 $\Omega$ or less, 0.82 $\Omega$ or less, 0.8 $\Omega$ or less, 0.78 $\Omega$ or less, 0.76 $\Omega$ or less, 0.74 $\Omega$ or less, 0.72 $\Omega$ or less, 0.7 $\Omega$ or less, 0.68 $\Omega$ or less, 0.66 $\Omega$ or less, 0.64 $\Omega$ or less, 0.62 $\Omega$ or less, or 0.6 $\Omega$ or less, and may be 0.3 $\Omega$ or more, 0.32 $\Omega$ or more, 0.34 $\Omega$ or more, 0.36 $\Omega$ or more, 0.38 $\Omega$ or more, 0.4 $\Omega$ or more, 0.42 $\Omega$ or more, 0.44 $\Omega$ or more, 0.46 $\Omega$ or more, 0.48 $\Omega$ or more, 0.5 $\Omega$ or more, 0.52 $\Omega$ or more, 0.54 $\Omega$ or more, 0.56 $\Omega$ or more, or 0.58 $\Omega$ or more. For example, $R_p$ may be 0.85 $\Omega$ or less, 0.3 $\Omega$ to 0.8 $\Omega$, 0.4 $\Omega$ to 0.7 $\Omega$, 0.5 $\Omega$ to 0.64 $\Omega$, or 0.54 $\Omega$ to 0.6 $\Omega$. When this range is satisfied, the difference between the interfacial resistance of the positive electrode and the interfacial resistance of the negative electrode may be adjusted to an appropriate level, so that the degradation of both the positive electrode and the negative electrode may be prevented.

In this case, $R_p$ may be adjusted using, for example, the composition of the first positive electrode active material and the second positive electrode active material, the cobalt contents of the first coating layer included in the first positive electrode active material and the second coating layer included in the second positive electrode active material, and rinsing conditions when preparing the first positive electrode active material and the second positive electrode active material.

**2) Negative Electrode**

The negative electrode includes a silicon-based negative electrode active material. Specifically, the negative electrode may include: a negative electrode collector; and a negative electrode active material layer. The negative electrode active material layer may include the silicon-based negative electrode active material.

The negative electrode collector is not particularly limited as long as it has a high conductivity without causing chemical changes in the battery, and may be, for example, a copper, a stainless steel, aluminum, nickel, titanium, calcined carbon, a copper or a stainless steel with its surface processed with carbon, nickel, titanium, silver or the like, or an aluminum-cadmium alloy. The negative electrode collector may typically have a thickness of about 3 $\mu$m to 500 $\mu$m.

Similarly to the positive electrode collector, the negative electrode collector may include fine irregularities on its surface to enhance the adhesion of the negative electrode active material. For example, the negative electrode collector may be used in various forms such as a film, a sheet, a foil, a net, a porous material, a foam, and a nonwoven.

The negative electrode active material layer may be disposed on the negative electrode collector, and specifically, may be disposed on one or both sides of the negative electrode collector. The negative electrode active material layer may have a single-layer structure or a multilayer structure including two or more layers.

The silicon-based negative electrode active material may be particles including silicon (Si).

Further, the silicon-based negative electrode active material may be $SiO_x$ ($0 \leq x \leq 2$), a Si/C composite, or a combination thereof. $SiO_x$ ($0 \leq x \leq 2$) may be a form containing Si and $SiO_2$. The "x" corresponds to the number ratio of O to Si contained in $SiO_x$ ($0 \leq x \leq 2$). Alternatively, the silicon-based negative electrode active material may be $SiO_x$ ($0 \leq x \leq 2$) or SiO.

When the negative electrode includes the silicon-based negative electrode active material, there is the advantage of having the significantly high charge/discharge capacity, as compared to conventional carbon-based negative electrode active materials. However, due to the large irreversible capacity of the silicon-based negative electrode active material, the life characteristics of the battery may deteriorate. The lithium secondary battery according to the present disclosure includes the positive electrode active material including the single-particle type particles in the positive electrode, and adjusts the interfacial resistance of the positive electrode to a specific range, which may suppress the deterioration of the life characteristics of the battery.

The silicon-based negative electrode active material may be included in a content of 1 wt% to 30 wt%, 1 wt% to 25 wt%, or 2 wt% to 20 wt% in the negative electrode active material layer. When this range is satisfied, the sufficient capacity characteristics may be implemented.

The negative electrode active material layer may further include a carbon-based negative electrode active material as the negative electrode active material.

The carbon-based negative electrode active material may be at least one type selected from the group consisting of graphite such as natural graphite and artificial graphite; and carbon-based materials such as carbon black, acetylene black, ketchen black, channel black, furnace black, lamp black, summer black, carbon fiber, and carbon nanotubes. When the carbon-based negative electrode active material is included, the degradation of the life characteristics caused from the volume change of the silicon-based negative electrode active material during the charge/discharge may be suppressed.

When the carbon-based negative electrode active material is further included, the silicone-based negative electrode active material and the carbon-based negative electrode active material may be included in a weight ratio of 1:99 to 30:70, 1.5:98.5 to 20:80, or 2:98 to 15:85, or 2.5:97.5 to 10:90. When this range is satisfied, the superior capacity characteristics and the excellent life characteristics may be achieved.

The carbon-based negative electrode active material may be included in a content of 70 wt% to 99 wt%, preferably 75 wt% to 99 wt%, and more preferably 80 wt% to 98 wt% in the negative electrode active material layer. When this range is satisfied, the life characteristics of the battery may be improved while achieving sufficient capacity characteristics.

The negative electrode active material layer may selectively further include a negative electrode conductive agent and a negative electrode binder.

The negative electrode conductive agent is used to impart a conductivity to the electrode, and is not particularly limited as long as it has the electronic conductivity without causing chemical changes in the battery. The negative electrode conductive agent includes, for example, graphite such as natural graphite and artificial graphite; carbon-based materials such as carbon black, acetylene black, ketchen black, channel black, furnace black, lamp black, summer black, carbon fiber, and carbon nanotubes; metal powder or metal fiber such as a copper, nickel, aluminum, and silver; conductive whiskers such as zinc oxide and potassium titanate; conductive metal oxides such as titanium oxide; and conductive polymers such as polyphenylene derivatives, and one type alone or a mixture of two or more types thereof may be used. The negative electrode conductive agent may be typically included in a content of 1 wt% to 30 wt%, 1 wt% to 20 wt%, or 1 wt% to 10 wt% based on the total weight of the negative electrode active material layer.

The negative electrode binder serves to enhance the adhesion among the negative electrode active material particles and the bonding force between the negative electrode active material and the negative electrode collector. The negative electrode binder includes, for example, polyvinylidene fluoride (PVDF), a vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene monomer rubber (EPDM rubber), sulfonated EPDM, styrene-butadiene rubber (SBR), fluorinated rubber, and various copolymers thereof, and one type alone or a mixture of two or more types thereof may be used. The negative electrode binder may be included in a content of 1 wt% to 30 wt%, preferably 1 wt% to 20 wt%, and more preferably 1 wt% to 10 wt% based on the total weight of the negative electrode active material layer.

In the negative electrode, $R_n$ may be 0.6 $\Omega$ or less. Specifically, $R_n$ may be 0.6 $\Omega$ or less, 0.58 $\Omega$ or less, 0.56 $\Omega$ or less, 0.54 $\Omega$ or less, 0.52 $\Omega$ or less, or 0.5 $\Omega$ or less, and may be 0.2 $\Omega$ or more, 0.22 $\Omega$ or more, 0.24 $\Omega$ or more, 0.26 $\Omega$ or more, 0.28 $\Omega$ or more, 0.3 $\Omega$ or more, 0.32 $\Omega$ or more, 0.34 $\Omega$ or more, 0.36 $\Omega$ or more, 0.38 $\Omega$ or more, 0.4 $\Omega$ or more, 0.42 $\Omega$ or more, 0.44 $\Omega$ or more, 0.46 $\Omega$ or more, or 0.48 $\Omega$ or more. For example, $R_n$ may be 0.6 $\Omega$ or less, 0.2 $\Omega$ to 0.58 $\Omega$, 0.3 $\Omega$ to 0.54 $\Omega$, or 0.44 $\Omega$ to 0.5 $\Omega$. When this range is satisfied, the imbalance in resistance between the positive electrode and the negative electrode may be suppressed.

## 3) Separator

Next, the separator separates the negative electrode and the positive electrode from each other while providing a migration pathway for lithium ions, and is not particularly limited as long as it is typically used as a separator in lithium secondary batteries. The separator may be interposed between the positive electrode and the negative electrode.

The separator may be a porous polymer film, for example, a porous polymer film made of polyolefin-based polymers such as an ethylene homopolymer, a propylene homopolymer, an ethylene/butene copolymer, an ethylene/hexene copolymer, and an ethylene/methacrylate copolymer, or a stacked structure of two or more layers thereof. Further, the separator may be a common porous nonwoven, for example, a nonwoven made of a glass fiber with a high melting point or a polyethylene terephthalate fiber. In order to assure the heat resistance or mechanical strength, a coated separator including a ceramic component or a polymeric material may be used.

**(2) Electrolyte**

The electrolyte according to the present disclosure includes a lithium salt and an organic solvent.

The lithium salt is not particularly limited as long as it is a compound that may provide lithium ions used in lithium secondary batteries. According to an embodiment, the lithium salt may be, for example, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN (C_2F_5SO_3)_2$, $LiN(C_2F_5SO_2)_2$, $LiN(CF_3SO_2)_2$, $LiCl$, $LiI$, or $LiB(C_2O_4)_2$. The concentration of the lithium salt may be within the range of 0.1 M to 5.0 M or 0.1 M to 3.0 M. When the concentration of the lithium salt falls in the range above, the electrolyte has the appropriate conductivity and viscosity, so that the excellent electrolyte performance may be achieved, and the lithium ions may effectively migrate.

The organic solvent may include at least one of a cyclic carbonate-based organic solvent, a linear carbonate-based organic solvent, a linear ester-based organic solvent, and a cyclic ester-based organic solvent.

The cyclic carbonate-based organic solvent is a high-viscosity organic solvent, and may include at least one organic solvent selected from the group consisting of, for example, ethylene carbonate (EC), propylene carbonate (PC), 1,2-butylene carbonate, 2,3-butylene carbonate, 1,2-pentylene carbonate, 2,3-pentylene carbonate, and vinylene carbonate.

The linear carbonate-based organic solvent is an organic solvent having a low viscosity and a low dielectric constant, and may include at least one organic solvent selected from the group consisting of, for example, dimethyl carbonate (DMC), diethyl carbonate (DEC), and dipropyl carbonate, ethylmethyl carbonate (EMC), methylpropyl carbonate, and ethylpropyl carbonate, and specifically may include ethylmethyl carbonate (EMC).

The linear ester-based organic solvent may be at least one organic solvent selected from the group consisting of, for example, methyl acetate, ethyl acetate, propyl acetate, methyl propionate, ethyl propionate, propyl propionate, and butyl propionate.

The cyclic ester-based organic solvent may be at least one organic solvent selected from the group consisting of $\gamma$-butyrolactone, y-valerolactone, $\gamma$-caprolactone, $\sigma$-valerolactone, and $\varepsilon$-caprolactone.

Preferably, the electrolyte according to the present disclosure may include ethylene carbonate and dimethyl carbonate as the organic solvent.

The electrolyte may further include other additives, in addition to the electrolyte components described above, for the purpose of, for example, improving the life characteristics of the battery, suppressing the decrease of the battery capacity, and improving the discharge capacity of the battery.

The other additives may include at least one other additive selected from, for example, cyclic carbonate-based compounds, halogen-substituted carbonate-based compounds, sultone-based compounds, sulfate-based compounds, borate-based compounds, nitrile-based compounds, benzene-based compounds, amine-based compounds, silane-based compounds, and lithium salt-based compounds different from the lithium salt included in the electrolyte.

Specifically, the other additives are one compound or two or more compounds selected from the group consisting of vinylene carbonate (VC), vinylethylene carbonate, fluoroethylene carbonate (FEC), 1,3-propane sultone (PS), 1,4-butane sultone, ethene sultone, 1,3-propene sultone (PRS), 1,4-butene sultone, 1-methyl-1,3-propene sultone, ethylene sulfate (Esa), trimethylene sulfate (TMS), methyl trimethylene sulfate (MTMS), tetraphenylborate, lithium oxalyl difluoroborate, succinonitrile, adiponitrile, acetonitrile, propionitrile, butyronitrile, valeronitrile, caprylonitrile, heptanitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, 4-fluorophenylacetonitrile, fluorobenzene, triethanolamine, ethylenediamine, tetravinylsilane, $LiN(SO_2F)_2$ (lithium bis(fluorosulfonyl)imide, LiFSI), $LiN (SO_2CF_3)_2$ (lithium bis(trifluoromethane sulfonyl)imide, LiTFSI), $LiPO_2F_2$, LiODFB, LiBOB (lithium bisoxalatoborate ($LiB(C_2O_4)_2$), and $LiBF_4$.

The other additives may be included in a content of 0.01 wt% to 20 wt% based on the total weight of the electrolyte, and preferably may be included in a content of 0.05wt% to 5.0 wt%. When the content of the other additives is less than 0.01 wt%, the effect of improving the low-temperature output, the high-temperature storage characteristics, and the high-temperature life characteristics of the battery may be insignificant, and when the content of the other additives exceeds 20 wt%, side reactions in the electrolyte may occur excessively during the charge/discharge. Especially, when additives for forming a solid electrolyte interphase (SEI) film are added in excessive amounts, the additives may not be sufficiently decomposed at a high temperature, and may remain unreacted or precipitated in the electrolyte at room temperature. As a result, the side reactions may occur, which degrade the life characteristics or resistance characteristics of the secondary battery.

**(3) Battery Case**

The battery case is used to accommodate the electrode assembly and the electrolyte, and various battery cases well-known in the art, for example, cylindrical battery cases, prismatic battery cases, and pouch type battery cases may be used.

The lithium secondary battery according to the present disclosure is useful in the fields of, for example, portable devices such as mobile phones, notebook computers, and digital cameras, and electric vehicles such as hybrid electric vehicles (HEVs).

Further, a battery module or battery pack including the lithium secondary battery as a unit cell may be used as a power source for any one or more medium-large size devices among power tools; electric vehicles (EVs) including hybrid electric vehicles and plug-in hybrid electric vehicle (PHEVs); and power storage systems.

The lithium secondary battery according to the present disclosure may be applied not only to a battery cell used as a power source of small devices, but also to a unit cell of a medium-large size battery module including a plurality of battery cells.

Examples of the medium-large size devices include electric vehicles, hybrid electric vehicles, plug-in hybrid electric vehicles, and power storage systems, but may not be limited thereto.

## Manufacturing Method of Lithium Secondary Battery

Next, a method of manufacturing a lithium secondary battery according to the present disclosure is described.

Referring to the FIGURE, a manufacturing method of a lithium secondary battery according to the present disclosure includes: mixing a first positive electrode active material in distilled water to perform a first rinsing, followed by a drying (S1); mixing a second positive electrode active material in distilled water to perform a second rinsing, followed by a drying (S2); applying a positive electrode slurry including the first positive electrode active material and the second positive electrode active material onto a positive electrode collector to manufacture a positive electrode (S3); manufacturing a negative electrode including a silicon-based negative electrode active material (S4); and manufacturing a lithium secondary battery including the positive electrode, the negative electrode, and an electrolyte (S5). The first rinsing is performed at a higher temperature than that for the second rinsing. The average particle diameter $D_{50}$ of the first positive electrode active material is larger than the average particle diameter $D_{50}$ of the second positive electrode active material. The first positive electrode active material and the second positive electrode active material include single-particle type particles. The lithium secondary battery has an interfacial resistance factor (IRF) value of 1 to 1.4, defined by Equation 1 below:

$$[\text{Equation 1}]$$

$$IRF = \frac{R_p}{R_n}$$

in Equation 1 above, $R_n[Q]$ refers to an interfacial resistance of the negative electrode measured after 100 cycles of charge/discharge are performed for the lithium secondary battery manufactured using the negative electrode, and $R_p$ [Q] refers to an interfacial resistance of the positive electrode measured after 100 cycles of charge/discharge are performed for the lithium secondary battery manufactured using the positive electrode.

Hereinafter, each step of the manufacturing method of the lithium secondary battery according to the present disclosure is described in detail.

## (1) Step S1: Rinsing of First Positive Electrode Active Material

First, a step is performed, which mixes the first positive electrode active material in distilled water to perform the first rinsing, and then, performs a drying (step S1) .

The first positive electrode active material includes the single-particle type particles. When the first positive electrode active material includes the single-particle type particles, the lithium diffusion distance is long due to the large particle size of the single-particle type particles, and therefore, the diffusion resistance increases, which may reduce the efficiency of the positive electrode. As a result, the efficiency balance with the negative electrode may be achieved when the silicon-based negative electrode active material is applied. Thus, it is possible to suppress the loss of lithium ions caused from the irreversible capacity when the silicon-based negative electrode active material is applied, and it is also possible to prevent or suppress the occurrence of a phenomenon of lithium precipitation on the surface of the negative electrode, so that the life characteristics of the lithium secondary battery using the positive electrode according to the present disclosure may be improved. Further, when the first positive electrode active material including the single-particle type particles is applied unlike the case of using a conventional sacrificial positive electrode material, it is possible to prevent or suppress the generation of lithium by-products resulting from the use of the sacrificial positive electrode material during the charge/discharge, so that the superior high-temperature storage characteristics and the superior high-temperature life characteristics may be achieved.

Since the first positive electrode active material is the same as described above, detailed descriptions thereof are omitted.

In step S1, the rinsing is performed on the first positive electrode active material with a higher rinsing intensity than that for the rinsing of the second positive electrode active material, thereby adjusting the interfacial resistance of the positive electrode to a specific range.

Specifically, the first rinsing is performed at a higher temperature than that for the second rinsing.

The first rinsing is performed at 20 °C to 40 °C, 25 °C to 35 °C, or 27 °C to 38 °C. When the first rinsing is performed at the temperature above, the interfacial resistance of the positive electrode may be adjusted to a desired range.

The first rinsing may be performed by mixing the first positive electrode active material in an amount of 50 wt% to 70 wt%, 55 wt% to 65 wt%, or 57 wt% to 63 wt% based on the total weight of the distilled water. In this case, the amount of residual lithium on the surface of the positive electrode active material may be reduced, so that the deterioration of high-temperature durability may be prevented.

The drying may be performed at 60 °C to 200 °C, 70 °C to 180 °C, or 80 °C to 160 °C.

## (2) Step S2: Rinsing of Second Positive Electrode Active Material

Next, a step is performed, which mixes the second positive electrode active material in distilled water to perform the second rinsing, and then, performs a drying (step S2).

The second positive electrode active material includes the single-particle type particles. When the second positive electrode active material includes the single-particle type particles, the lithium diffusion distance is long due to the large particle size of the single-particle type particles, and therefore, the diffusion resistance increases, which may reduce the efficiency of the positive electrode. As a result, the efficiency balance with the negative electrode may be achieved when the silicon-based negative electrode active material is applied. Thus, it is possible to suppress the loss of lithium ions caused from the irreversible capacity when the silicon-based negative electrode active material is applied, and it is also possible to prevent or suppress the occurrence of a phenomenon of lithium precipitation on the surface of the negative electrode, so that the life characteristics of the lithium secondary battery using the positive electrode according to the present disclosure may be improved. Further, when the second positive electrode active material including the single-particle type particles is applied unlike the case of using a conventional sacrificial positive electrode material, it is possible to prevent or suppress the generation of lithium by-products resulting from the use of the sacrificial positive electrode material during the charge/discharge, so that the superior high-temperature storage characteristics and the superior high-temperature life characteristics may be achieved.

The average particle diameter $D_{50}$ of the first positive electrode active material is larger than the average particle diameter $D_{50}$ of the second positive electrode active material.

Since the second positive electrode active material is the same as described above, detailed descriptions thereof are omitted.

In step S2, the rinsing is performed on the second positive electrode active material having the smaller particle diameter and the larger specific surface area than those of the first positive electrode active material, with a lower rinsing intensity than that for the rinsing of the first positive electrode active material, to prevent the deterioration of the high-temperature durability of the second positive electrode active material and adjust the interfacial resistance of the positive electrode to a specific range.

The second rinsing of the second positive electrode active material may be performed at 3 °C to 18 °C, 5 °C to 15 °C, or 7 °C to 13 °C. When the second rinsing is performed in the temperature range above, the interfacial resistance of the positive electrode may be adjusted to a desired range, and the deterioration of the high-temperature durability may be prevented or minimized.

The second rinsing may be performed by mixing the second positive electrode active material in an amount of 65 wt% to 85 wt%, 70 wt% to 80 wt%, or 72 wt% to 78 wt% based on the total weight of the distilled water. In this case, the amount of residual lithium on the surface of the positive electrode active material may be reduced, so that the deterioration of high-temperature durability may be prevented.

The drying may be performed at 60 °C to 200 °C, 70 °C to 180 °C, or 80 °C to 160 °C.

## (3) Step S3: Manufacture of Positive Electrode

Next, a step is performed, which applies a positive electrode slurry including the first positive electrode active material and the second positive electrode active material onto a positive electrode collector to manufacture the positive electrode (step S3).

First, the positive electrode slurry may be prepared by mixing the first positive electrode active material, the second positive electrode active material, and a solvent.

Since the first positive electrode active material and the second positive electrode active material are the same as described above, detailed descriptions thereof are omitted.

The positive electrode slurry may selectively further include a positive electrode binder and/or a positive electrode conductive agent.

Since the positive electrode binder and the positive electrode conductive agent are the same as described above, detailed descriptions thereof are omitted.

Meanwhile, the solvent used for the positive electrode slurry may be an aqueous solvent, an organic solvent, or a combination thereof.

The aqueous solvent may include, for example, water, and the organic solvent may include one or more species selected from the group consisting of N-methyl pyrrolidone (NMP), dimethylformamide (DMF), dimethyl sulfoxide (DMSO), dihydrolevoglucosenone (Cyrene), $\gamma$-valerolactone, dimethyl isosorbide (DMI), and methyl-5-(dimethylamino)-2-methyl-5-oxopentanoate, or may include N-methyl pyrrolidone.

Next, the positive electrode slurry may be applied to a positive electrode collector to form a positive electrode active material layer. Specifically, after applying the positive electrode slurry to one or both sides of the positive electrode collector, a drying and a rolling may be performed to form the positive electrode active material layer, and therefore, manufacture the positive electrode.

Since the positive electrode collector is the same as described above, detailed descriptions thereof are omitted.

The applying process may be performed continuously or discontinuously using various applying methods well-known in the art, for example, a slot die coating, a slide coating, and a curtain coating.

The drying may be performed at 40 °C to 180 °C, 60 °C to 160 °C, or 70 °C to 150 °C.

The rolling may be performed according to a roll press method, which rolls the positive electrode by adjusting the gap between upper and lower rolls to match the thickness of the positive electrode, but may not be limited thereto.

### (4) Step S4: Manufacture of Negative Electrode

Next, a step is performed, which manufactures the negative electrode including the silicon-based negative electrode active material (step S4).

First, the silicon-based negative electrode active material and a solvent may be mixed with each other to prepare a negative electrode slurry.

Since the silicon-based negative electrode active material is the same as described above, detailed descriptions thereof are omitted.

The negative electrode slurry may further include a carbon-based negative electrode active material.

Since the carbon-based negative electrode active material is the same as described above, detailed descriptions thereof are omitted.

The negative electrode slurry may selectively further include a negative electrode binder and/or a negative electrode conductive agent.

Since the negative electrode binder and the negative electrode conductive agent are the same as described above, detailed descriptions thereof are omitted.

Meanwhile, the solvent used for the negative electrode slurry may be an aqueous solvent, an organic solvent, or a combination thereof.

The aqueous solvent may include, for example, water, and the organic solvent may include one or more species selected from the group consisting of N-methyl pyrrolidone (NMP), dimethylformamide (DMF), dimethyl sulfoxide (DMSO), dihydrolevoglucosenone (Cyrene), $\gamma$-valerolactone, dimethyl isosorbide (DMI), and methyl-5-(dimethylamino)-2-methyl-5-oxopentanoate, or may include N-methyl pyrrolidone.

Next, the negative electrode slurry may be applied to a negative electrode collector to form a negative electrode active material layer. Specifically, after applying the negative electrode slurry to one or both sides of the negative electrode collector, a drying and a rolling may be performed to form the negative electrode active material layer, and therefore, manufacture the negative electrode.

Since the negative electrode collector is the same as described above, detailed descriptions thereof are omitted.

The applying process may be performed continuously or discontinuously using various applying methods well-known in the art, for example, a slot die coating, a slide coating, and a curtain coating.

The drying may be performed at 40 °C to 180 °C, 60 °C to 160 °C, or 70 °C to 150 °C.

The rolling may be performed according to a roll press method, which rolls the positive electrode by adjusting the gap between upper and lower rolls to match the thickness of the positive electrode, but may not be limited thereto.

**(5) Step S5: Manufacture of Lithium Secondary Battery**

Next, a step is performed, which manufactures a lithium secondary battery including the positive electrode, the negative electrode, and an electrolyte, (step S5).

First, an electrode assembly including the positive electrode and the negative electrode may be formed, specifically, the positive electrode, a separator, and the negative electrode may be stacked sequentially to form an electrode assembly.

Types of the electrode assembly may include, for example, a stack type, a jelly-roll type, and a stack-and-folding type, but may not be limited thereto.

Then, the electrode assembly is accommodated in the battery case, the electrolyte is injected thereinto, and then, the battery case is sealed, to manufacture the lithium secondary battery.

The sealing may be performed by carrying out a heat welding or heat fusing on the opened portion of the battery case.

Since the IRF value, $R_n$, and $R_p$ are the same as described above, detailed descriptions thereof are omitted.

Since the separator, the electrode assembly, the electrolyte, and the battery case are the same as described above, detailed descriptions thereof are omitted.

Hereinafter, Examples of the present disclosure are described in detail to facilitate the practicing of the present disclosure by one of ordinary skill in the technical field to which the present disclosure belongs. However, the present disclosure may be implemented in various different forms, and is not limited to the Examples described herein below.

**Example 1**

<Preparation of First Positive Electrode Active Material>

$NiSO_4$, $CoSO_4$, and $MnSO_4$ were mixed in distilled water in an amount at which the molar ratio of nickel:cobalt:manganese was 83:7:10, to prepare a transition metal aqueous solution.

Subsequently, deionized water was added to a reactor, and then, the reactor was purged with nitrogen gas to remove dissolved oxygen in the water and set up a non-oxidizing atmosphere inside the reactor. Thereafter, while adding NaOH, a co-precipitation reaction was progressed, to prepare a precursor having the average particle diameter $D_{50}$ of 8.6 $\mu$m and represented by $Ni_{0.83}CO_{0.07}Mn_{0.1}(OH)_2$.

The precursor and LiOH were mixed in a ratio of 1:1.05, Al was added as a doping element, and the mixture was calcined at 910 °C for 16 hours, to prepare a first lithium transition metal oxide represented by Li $[Ni_{0.81}CO_{0.07}Mn_{0.10}Al_{0.02}]O_2$.

Then, the first lithium transition metal oxide was washed by being mixed in distilled water at 30 °C to reach a solid content of 60 wt%, dried, and then, mixed with $Co(OH)_2$. Then, a heat treatment was performed at 750 °C for 5 hours to prepare a Co-coated first positive electrode active material. It was verified that the first positive electrode active material contained 3 mol% Co, had the average particle diameter $D_{50}$ of 8.6 $\mu$m, and was single-particle type particles.

<Preparation of Second Positive Electrode Active Material>

$NiSO_4$, $CoSO_4$, and $MnSO_4$ were mixed in distilled water in an amount at which the molar ratio of nickel:cobalt:manganese was 83:7:10, to prepare a transition metal aqueous solution.

Subsequently, deionized water was added to a reactor, and then, the reactor was purged with nitrogen gas to remove dissolved oxygen in the water and set up a non-oxidizing atmosphere inside the reactor. Thereafter, while adding NaOH, a co-precipitation reaction was progressed, to prepare a precursor having the average particle diameter $D_{50}$ of 3.1 $\mu$m and represented by $Ni_{0.83}Co_{0.07}Mn_{0.1}(OH)_2$.

The precursor and LiOH were mixed in a ratio of 1:1.05, Al was added as a doping element, and the mixture was calcined at 910 °C for 16 hours, to prepare a second lithium transition metal oxide represented by Li $[Ni_{0.81}Co_{0.07}Mn_{0.10}Al_{0.02}]O_2$.

Then, the second lithium transition metal oxide was washed by being mixed in distilled water at 10 °C to reach a solid content of 75 wt%, dried, and then, mixed with $Co(OH)_2$. Then, a heat treatment was performed at 750 °C for 5 hours to prepare a Co-coated second positive electrode active material. It was verified that the second positive electrode active material contained 1 mol% Co, had the average particle diameter $D_{50}$ of 3.1 $\mu$m, and was single-particle type particles.

<Manufacture of Positive Electrode>

The first positive electrode active material and the second positive electrode active material that were prepared as described above were mixed in a weight ratio of 60:40, to prepare a positive electrode material. The positive electrode material, carbon black as a conductive agent, and polyvinylidene fluoride (PVDF) as a binder were mixed in a weight ratio of 96:2:2 in an N-methylpyrrolidone solvent, to prepare a positive electrode slurry. The positive electrode slurry was applied to one side of an aluminum collector with a thickness of 20 $\mu$m, dried at 130 °C, and then, rolled, to manufacture a positive electrode with a thickness of 70 $\mu$m.

<Manufacture of Lithium Secondary Battery>

A negative electrode active material obtained by mixing SiO:artificial graphite in a weight ratio of 5:95, carbon black as a conductive agent, SBR as a binder, and CMC as a thickener were mixed in a weight ratio of 95.6:1.0:2.3:1.1 in distilled water, to prepare a negative electrode slurry. The negative electrode slurry was applied to one side of a copper collector with a thickness of 12 $\mu$m, dried at 130 °C, and rolled, to manufacture a negative electrode (slurry solid content: 50 wt% based on the total weight of the negative electrode slurry).

After a porous polyethylene separator was interposed between the prepared positive electrode and negative electrode to manufacture an electrode assembly, the electrode assembly was disposed in the battery case, and then, the electrolyte was injected to manufacture a lithium secondary battery. As the electrolyte, an electrolyte solution obtained by dissolving 1.0 M of LiPF$_6$ in an organic solvent, in which ethylene carbonate (EC):ethyl methyl carbonate (EMC) were mixed in a volume ratio of 3:7, was used.

**Example 2**

<Preparation of First Positive Electrode Active Material>

NiSO$_4$, CoSO$_4$, and MnSO$_4$ were mixed in distilled water in an amount at which the molar ratio of nickel:cobalt:manganese was 83:7:10, to prepare a transition metal aqueous solution.

Subsequently, deionized water was added to a reactor, and then, the reactor was purged with nitrogen gas to remove dissolved oxygen in the water and set up a non-oxidizing atmosphere inside the reactor. Thereafter, while adding NaOH, a co-precipitation reaction was progressed, to prepare a precursor having the average particle diameter D$_{50}$ of 8.4$\mu$m and represented by Ni$_{0.83}$Co$_{0.07}$Mn$_{0.1}$(OH)$_2$.

The precursor and LiOH were mixed in a ratio of 1:1.05, Al was added as a doping element, and the mixture was calcined at 910 °C for 16 hours, to prepare a first lithium transition metal oxide represented by Li [Ni$_{0.81}$Co$_{0.07}$Mn$_{0.10}$Al$_{0.02}$]O$_2$.

Then, the first lithium transition metal oxide was washed by being mixed in distilled water at 25 °C to reach a solid content of 60 wt%, dried, and then, mixed with Co(OH)$_2$. Then, a heat treatment was performed at 750 °C for 5 hours to prepare a Co-coated first positive electrode active material. It was verified that the first positive electrode active material contained 3 mol% Co, had the average particle diameter D$_{50}$ of 8.4 $\mu$m, and was single-particle type particles.

<Preparation of Second Positive Electrode Active Material>

NiSO$_4$, CoSO$_4$, and MnSO$_4$ were mixed in distilled water in an amount at which the molar ratio of nickel:cobalt:manganese was 83:7:10, to prepare a transition metal aqueous solution.

Subsequently, deionized water was added to a reactor, and then, the reactor was purged with nitrogen gas to remove dissolved oxygen in the water and set up a non-oxidizing atmosphere inside the reactor. Thereafter, while adding NaOH, a co-precipitation reaction was progressed, to prepare a precursor having the average particle diameter D$_{50}$ of 3.3$\mu$m and represented by Ni$_{0.83}$Co$_{0.07}$Mn$_{0.1}$(OH)$_2$.

The precursor and LiOH were mixed in a ratio of 1:1.05, Al was added as a doping element, and the mixture was calcined at 910 °C for 16 hours, to prepare a second lithium transition metal oxide represented by Li [Ni$_{0.81}$Co$_{0.07}$Mn$_{0.10}$Al$_{0.02}$]O$_2$.

Then, the second lithium transition metal oxide was washed by being mixed in distilled water at 15 °C to reach a solid content of 75 wt%, dried, and then, mixed with Co(OH)$_2$. Then, a heat treatment was performed at 750 °C for 5 hours to prepare a Co-coated second positive electrode active material. It was verified that the second positive electrode active material contained 1 mol% Co, had the average particle diameter D$_{50}$ of 3.3$\mu$m, and was single-particle type particles.

<Manufacture of Positive Electrode>

The positive electrode was manufactured in the same manner, except that the first positive electrode active material and the second positive electrode active material that were prepared as described above were used.

<Manufacture of Lithium Secondary Battery>

The lithium secondary battery was manufactured in the same manner as that in Example 1, except that the positive electrode manufactured as described above was used.

**Example 3**

<Preparation of First Positive Electrode Active Material>

$NiSO_4$, $CoSO_4$, and $MnSO_4$ were mixed in distilled water in an amount at which the molar ratio of nickel:cobalt:manganese was 83:7:10, to prepare a transition metal aqueous solution.

Subsequently, deionized water was added to a reactor, and then, the reactor was purged with nitrogen gas to remove dissolved oxygen in the water and set up a non-oxidizing atmosphere inside the reactor. Thereafter, while adding NaOH, a co-precipitation reaction was progressed, to prepare a precursor having the average particle diameter $D_{50}$ of 8.1 $\mu$m and represented by $Ni_{0.83}Co_{0.07}Mn_{0.1}(OH)_2$.

The precursor and LiOH were mixed in a ratio of 1:1.05, Al was added as a doping element, and the mixture was calcined at 910 °C for 16 hours, to prepare a first lithium transition metal oxide represented by $Li[Ni_{0.81}Co_{0.07}Mn_{0.10}Al_{0.02}]O_2$.

Then, the first lithium transition metal oxide was washed by being mixed in distilled water at 30 °C to reach a solid content of 60 wt%, dried, and then, mixed with $Co(OH)_2$. Then, a heat treatment was performed at 750 °C for 5 hours to prepare a Co-coated first positive electrode active material. It was verified that the first positive electrode active material contained 2.5 mol% Co, had the average particle diameter $D_{50}$ of 8.1 $\mu$m, and was single-particle type particles.

<Preparation of Second Positive Electrode Active Material>

$NiSO_4$, $CoSO_4$, and $MnSO_4$ were mixed in distilled water in an amount at which the molar ratio of nickel:cobalt:manganese was 83:7:10, to prepare a transition metal aqueous solution.

Subsequently, deionized water was added to a reactor, and then, the reactor was purged with nitrogen gas to remove dissolved oxygen in the water and set up a non-oxidizing atmosphere inside the reactor. Thereafter, while adding NaOH, a co-precipitation reaction was progressed, to prepare a precursor having the average particle diameter $D_{50}$ of 3.5 $\mu$m and represented by $Ni_{0.83}Co_{0.07}Mn_{0.1}(OH)_2$.

The precursor and LiOH were mixed in a ratio of 1:1.05, Al was added as a doping element, and the mixture was calcined at 910 °C for 16 hours, to prepare a second lithium transition metal oxide represented by $Li[Ni_{0.81}Co_{0.07}Mn_{0.10}Al_{0.02}]O_2$.

Then, the second lithium transition metal oxide was washed by being mixed in distilled water at 10 °C to reach a solid content of 75 wt%, dried, and then, mixed with $Co(OH)_2$. Then, a heat treatment was performed at 750 °C for 5 hours to prepare a Co-coated second positive electrode active material. It was verified that the second positive electrode active material contained 1.5 mol% Co, had the average particle diameter $D_{50}$ of 3.5 $\mu$m, and was single-particle type particles.

<Manufacture of Positive Electrode>

The positive electrode was manufactured in the same manner, except that the first positive electrode active material and the second positive electrode active material that were prepared as described above were used.

<Manufacture of Lithium Secondary Battery>

The lithium secondary battery was manufactured in the same manner as that in Example 1, except that the positive electrode manufactured as described above was used.

**Comparative Example 1**

<Preparation of First Positive Electrode Active Material>

$NiSO_4$, $CoSO_4$, and $MnSO_4$ were mixed in distilled water in an amount at which the molar ratio of nickel:cobalt:manganese was 83:7:10, to prepare a transition metal aqueous solution.

Subsequently, deionized water was added to a reactor, and then, the reactor was purged with nitrogen gas to remove dissolved oxygen in the water and set up a non-oxidizing atmosphere inside the reactor. Thereafter, while adding NaOH, a co-precipitation reaction was progressed, to prepare a precursor having the average particle diameter $D_{50}$ of 7.2

$\mu$m and represented by $Ni_{0.83}Co_{0.07}Mn_{0.1}(OH)_2$.

The precursor and LiOH were mixed in a ratio of 1:1.05, Al was added as a doping element, and the mixture was calcined at 910 °C for 16 hours, to prepare a first lithium transition metal oxide represented by $Li[Ni_{0.81}Co_{0.07}Mn_{0.10}Al_{0.02}]O_2$.

Then, the first lithium transition metal oxide was washed by being mixed in distilled water at 10 °C to reach a solid content of 75 wt%, dried, and then, mixed with $Co(OH)_2$. Then, a heat treatment was performed at 750 °C for 5 hours to prepare a Co-coated first positive electrode active material. It was verified that the first positive electrode active material contained 3 mol% Co, had the average particle diameter $D_{50}$ of 7.2 $\mu$m, and was single-particle type particles.

<Preparation of Second Positive Electrode Active Material>

$NiSO_4$, $CoSO_4$, and $MnSO_4$ were mixed in distilled water in an amount at which the molar ratio of nickel:cobalt:manganese was 83:7:10, to prepare a transition metal aqueous solution.

Subsequently, deionized water was added to a reactor, and then, the reactor was purged with nitrogen gas to remove dissolved oxygen in the water and set up a non-oxidizing atmosphere inside the reactor. Thereafter, while adding NaOH, a co-precipitation reaction was progressed, to prepare a precursor having the average particle diameter $D_{50}$ of 2.5 $\mu$m and represented by $Ni_{0.83}Co_{0.07}Mn_{0.1}(OH)_2$.

The precursor and LiOH were mixed in a ratio of 1:1.05, Al was added as a doping element, and the mixture was calcined at 910 °C for 16 hours, to prepare a second lithium transition metal oxide represented by $Li[Ni_{0.81}Co_{0.07}Mn_{0.10}Al_{0.02}]O_2$.

Then, the second lithium transition metal oxide was washed by being mixed in distilled water at 10 °C to reach a solid content of 75 wt%, dried, and then, mixed with $Co(OH)_2$. Then, a heat treatment was performed at 750 °C for 5 hours to prepare a Co-coated second positive electrode active material. It was verified that the second positive electrode active material contained 1 mol% Co, had the average particle diameter $D_{50}$ of 2.5 $\mu$m, and was single-particle type particles.

<Manufacture of Positive Electrode>

The positive electrode was manufactured in the same manner, except that the first positive electrode active material and the second positive electrode active material that were prepared as described above were used.

<Manufacture of Lithium Secondary Battery>

The lithium secondary battery was manufactured in the same manner as that in Example 1, except that the positive electrode manufactured as described above was used.

**Comparative Example 2**

<Preparation of First Positive Electrode Active Material>

$NiSO_4$, $CoSO_4$, and $MnSO_4$ were mixed in distilled water in an amount at which the molar ratio of nickel:cobalt:manganese was 83:7:10, to prepare a transition metal aqueous solution.

Subsequently, deionized water was added to a reactor, and then, the reactor was purged with nitrogen gas to remove dissolved oxygen in the water and set up a non-oxidizing atmosphere inside the reactor. Thereafter, while adding NaOH, a co-precipitation reaction was progressed, to prepare a precursor having the average particle diameter $D_{50}$ of 7.7 $\mu$m and represented by $Ni_{0.83}Co_{0.07}Mn_{0.1}(OH)_2$.

The precursor and LiOH were mixed in a ratio of 1:1.05, Al was added as a doping element, and the mixture was calcined at 910 °C for 16 hours, to prepare a first lithium transition metal oxide represented by $Li[Ni_{0.81}Co_{0.07}Mn_{0.10}Al_{0.02}]O_2$.

Then, the first lithium transition metal oxide was washed by being mixed in distilled water at 30 °C to reach a solid content of 60 wt%, dried, and then, mixed with $Co(OH)_2$. Then, a heat treatment was performed at 750 °C for 5 hours to prepare a Co-coated first positive electrode active material. It was verified that the first positive electrode active material contained 1 mol% Co, had the average particle diameter $D_{50}$ of 7.7 $\mu$m, and was single-particle type particles.

<Preparation of Second Positive Electrode Active Material>

$NiSO_4$, $CoSO_4$, and $MnSO_4$ were mixed in distilled water in an amount at which the molar ratio of nickel:cobalt:manganese was 83:7:10, to prepare a transition metal aqueous solution.

Subsequently, deionized water was added to a reactor, and then, the reactor was purged with nitrogen gas to remove dissolved oxygen in the water and set up a non-oxidizing atmosphere inside the reactor. Thereafter, while adding NaOH, a co-precipitation reaction was progressed, to prepare a precursor having the average particle diameter $D_{50}$ of 2.9 $\mu$m and represented by $Ni_{0.83}Co_{0.07}Mn_{0.1}(OH)_2$.

The precursor and LiOH were mixed in a ratio of 1:1.05, Al was added as a doping element, and the mixture was calcined at 910 °C for 16 hours, to prepare a second lithium transition metal oxide represented by $Li[Ni_{0.81}Co_{0.07}Mn_{0.10}Al_{0.02}]O_2$.

Then, the second lithium transition metal oxide was washed by being mixed in distilled water at 10 °C to reach a solid content of 70 wt%, dried, and then, mixed with $Co(OH)_2$. Then, a heat treatment was performed at 750 °C for 5 hours to prepare a Co-coated second positive electrode active material. It was verified that the second positive electrode active material contained 1 mol% Co, had the average particle diameter $D_{50}$ of 2.9 $\mu$m, and was single-particle type particles.

<Manufacture of Positive Electrode>

The positive electrode was manufactured in the same manner, except that the first positive electrode active material and the second positive electrode active material that were prepared as described above were used.

<Manufacture of Lithium Secondary Battery>

The lithium secondary battery was manufactured in the same manner as that in Example 1, except that the positive electrode manufactured as described above was used.

**Comparative Example 3**

<Preparation of First Positive Electrode Active Material>

$NiSO_4$, $CoSO_4$, and $MnSO_4$ were mixed in distilled water in an amount at which the molar ratio of nickel:cobalt:manganese was 83:7:10, to prepare a transition metal aqueous solution.

Subsequently, deionized water was added to a reactor, and then, the reactor was purged with nitrogen gas to remove dissolved oxygen in the water and set up a non-oxidizing atmosphere inside the reactor. Thereafter, while adding NaOH, a co-precipitation reaction was progressed, to prepare a precursor having the average particle diameter $D_{50}$ of 8.5 $\mu$m and represented by $Ni_{0.83}Co_{0.07}Mn_{0.1}(OH)_2$.

The precursor and LiOH were mixed in a ratio of 1:1.05, Al was added as a doping element, and the mixture was calcined at 910 °C for 16 hours, to prepare a first lithium transition metal oxide represented by $Li[Ni_{0.81}Co_{0.07}Mn_{0.10}Al_{0.02}]O_2$.

Then, the first lithium transition metal oxide was washed by being mixed in distilled water at 10 °C to reach a solid content of 75 wt%, dried, and then, mixed with $Co(OH)_2$. Then, a heat treatment was performed at 750 °C for 5 hours to prepare a Co-coated first positive electrode active material. It was verified that the first positive electrode active material contained 3 mol% Co, had the average particle diameter $D_{50}$ of 8.5 $\mu$m, and was single-particle type particles.

<Preparation of Second Positive Electrode Active Material>

$NiSO_4$, $CoSO_4$, and $MnSO_4$ were mixed in distilled water in an amount at which the molar ratio of nickel:cobalt:manganese was 83:7:10, to prepare a transition metal aqueous solution.

Subsequently, deionized water was added to a reactor, and then, the reactor was purged with nitrogen gas to remove dissolved oxygen in the water and set up a non-oxidizing atmosphere inside the reactor. Thereafter, while adding NaOH, a co-precipitation reaction was progressed, to prepare a precursor having the average particle diameter $D_{50}$ of 3.0 $\mu$m and represented by $Ni_{0.83}Co_{0.07}Mn_{0.1}(OH)_2$.

The precursor and LiOH were mixed in a ratio of 1:1.05, Al was added as a doping element, and the mixture was calcined at 910 °C for 16 hours, to prepare a second lithium transition metal oxide represented by $Li[Ni_{0.81}Co_{0.07}Mn_{0.10}Al_{0.02}]O_2$.

Then, the second lithium transition metal oxide was washed by being mixed in distilled water at 10 °C to reach a solid content of 70 wt%, dried, and then, mixed with $Co(OH)_2$. Then, a heat treatment was performed at 750 °C for 5 hours to prepare a Co-coated second positive electrode active material. It was verified that the second positive electrode active material contained 1 mol% Co, had the average particle diameter $D_{50}$ of 3.0 $\mu$m, and was single-particle type particles.

<Manufacture of Positive Electrode>

The positive electrode was manufactured in the same manner, except that the first positive electrode active material and the second positive electrode active material that were prepared as described above were used.

<Manufacture of Lithium Secondary Battery>

The lithium secondary battery was manufactured in the same manner as that in Example 1, except that the positive electrode manufactured as described above was used.

**Experimental Example 1-Measurement of IRF Value**

For the lithium secondary battery manufactured in each of Examples 1 to 3 and Comparative Examples 1 to 3, the IRF value defined by Equation 1 below was measured. Table 1 herein below represents the results.

[Equation 1]

$$IRF = \frac{R_p}{R_n}$$

In Equation 1 above, $R_n$ [$\Omega$] refers to the interfacial resistance of the negative electrode, which is measured after 100 cycles of charge/discharge are performed for the lithium secondary battery manufactured using the negative electrode described above, and $R_p$ [$\Omega$] refers to the interfacial resistance of the positive electrode, which is measured after 100 cycles of charge/discharge are performed for the lithium secondary battery manufactured using the positive electrode described above.

(1) Measurement of Interfacial Resistance $R_p$ of Positive Electrode

The lithium secondary battery manufactured in each of Examples 1 to 3 and Comparative Examples 1 to 3 was cycled for 100 cycles each in which charging is performed at 25 °C under conditions of CC/CV, 0.1 C, 4.2 V, 0.05 C cut, and discharging is performed under conditions of CC, 0.1 C, 3.0 V, and thereafter, charged to SOC 50 % or SOC 10 %, and the interfacial resistance of the positive electrode was measured at SOC 50% and SOC 10% of each lithium secondary battery using the Biologic VMP3 device (in the range of 100 kHz to 10 mHz, and the 25 °C condition).

(2) Measurement of Interfacial Resistance $R_n$ of Negative Electrode

The lithium secondary battery manufactured in each of Examples 1 to 3 and Comparative Examples 1 to 3 was cycled for 100 cycles each in which charging is performed at 25 °C under conditions of CC/CV, 0.1 C, 0.05 V, 0.05 C cut, and discharging is performed under conditions of CC, 0.1 C, 1.5 V, and thereafter, charged to SOC 50% or SOC 10 %, and the interfacial resistance of the negative electrode was measured at SOC 50 % and SOC 10 % of each lithium secondary battery using the Biologic VMP3 device (in the range of 100 kHz to 10 mHz, and the 25 °C condition).

[Table 1]

|  | Positive Electrode Interfacial Resistance [$\Omega$] for 100 cycles | Negative Electrode Interfacial Resistance [$\Omega$] for 100 cycles | IRF |
|---|---|---|---|
| Example 1 | 0.586 | 0.490 | 1.195918 |
| Example 2 | 0.538 | 0.506 | 1.063241 |
| Example 3 | 0.642 | 0.589 | 1.089983 |
| Comparative Example 1 | 0.281 | 0.592 | 0.474662 |
| Comparative Example 2 | 0.877 | 0.611 | 1.435352 |
| Comparative Example 3 | 0.377 | 0.673 | 0.560178 |

Referring to Table 1 above, it may be verified that the lithium secondary batteries manufactured in Examples 1 to 3 above satisfy the IRF value range of 1 to 1.4, while the lithium secondary batteries manufactured in Comparative Examples 1 to 3 exhibit the IRF value less than 1 or more than 1.4, which does not satisfy the range of 1 to 1.4.

**Experimental Example 2-Evaluation of High-Temperature Life Characteristics**

The lithium secondary batteries manufactured in Examples 1 to 3 and Comparative Examples 1 to 3 were cycled for 100 cycles, each in which charging is performed at 45 °C under conditions of CC/CV, 0.05 C and 4.2 V, 0.05 C, and then, discharging is performed to 3.0 V under conditions of CC, 1.0 C using an electrochemical charge/discharge system.

(1) Capacity Retention Rate

The capacity retention rate was calculated by the equation below, and Table 2 below represents the results.
Capacity retention rate (%)={(discharge capacity after 100 cycles/discharge capacity after 1 cycle)} x 100

(2) Resistance Increase Rate

After performing one cycle of charge/discharge, the discharge capacity after one cycle was measured using the electrochemical charge/discharge system, the SOC was adjusted to SOC 50%, and then, a pulse of 2.5C was applied for 10 seconds to calculate the initial resistance from the difference between the voltage before the pulse application and the voltage after the pulse application.
After performing 100 cycles of charge/discharge, the resistance after 100 cycles was calculated using the same method as described above, and the resistance increase rate was calculated using the equation below. Table 2 below represents the results.
Resistance increase rate (%)=(resistance after 100 cycles-initial resistance)/initial resistance x 100

[Table 2]

|  | Capacity Retention Rate (%) | Resistance Increase Rate (%) |
| --- | --- | --- |
| Example 1 | 98.9 | 11.3 |
| Example 2 | 97.4 | 16.3 |
| Example 3 | 96.9 | 18.1 |
| Comparative Example 1 | 93.2 | 43.5 |
| Comparative Example 2 | 94.5 | 39.7 |
| Comparative Example 3 | 92.3 | 48.9 |

Referring to Table 2 above, it may be verified that the lithium secondary batteries manufactured in Examples 1 to 3 exhibit the higher capacity retention rates at 45 °C than those of the lithium secondary batteries manufactured in Comparative Examples 1 to 3, and exhibit the lower resistance increase rates than those of the lithium secondary batteries manufactured in Comparative Examples 1 to 3. From the results, it may be understood that the lithium secondary batteries manufactured in Examples 1 to 3 employing the positive electrode active material of the present disclosure achieve the superior high-temperature life characteristics, as compared to the lithium secondary batteries that do not use the positive electrode active material of the present disclosure. While the technology of the present disclosure has been described with reference to embodiments, it may be appreciated by one skilled in the art of the present disclosure or one having ordinary skill in the art of the present disclosure that various modifications and changes may be made to the various embodiments of the present disclosure without departing from the technical scope of the various embodiments of the present disclosure defined in the claims attached herewith. Therefore, the technical scope of the various embodiments of the present disclosure is not limited to the detailed descriptions of the invention herein, but should be determined by the scope defined in the claims.

**Claims**

**1.** A lithium secondary battery comprising:

a positive electrode;
a negative electrode;
a separator disposed between the positive electrode and the negative electrode; and
an electrolyte;,

wherein the positive electrode includes a first positive electrode active material and a second positive electrode active material having different average particle diameters ($D_{50}$) from each other,

the average particle diameter ($D_{50}$) of the first positive electrode active material is larger than the average particle diameter ($D_{50}$) of the second positive electrode active material,

the first positive electrode active material and the second positive electrode active material include single-particle type particles,

the negative electrode includes a silicon-based negative electrode active material, and

the lithium secondary battery has an interfacial resistance factor (IRF) value of 1 to 1.4, defined by Equation 1 below:

$$[\text{Equation 1}]$$

$$IRF = \frac{R_p}{R_n}$$

in Equation 1 above, $R_n$ [Ω] refers to an interfacial resistance of the negative electrode measured after 100 cycles of charge/discharge are performed for the lithium secondary battery manufactured using the negative electrode, and

$R_p$ [Ω] refers to an interfacial resistance of the positive electrode measured after 100 cycles of charge/discharge are performed for the lithium secondary battery manufactured using the positive electrode.

2. The lithium secondary battery according to claim 1,

   wherein the first positive electrode active material includes a first lithium transition metal oxide represented by Formula 1 below:

   [Formula 1] $\qquad Li_{1+a1}Ni_{x1}Co_{y1}Mn_{z1}Al_{w1}M^1_{v1}O_2$

   in Formula 1 above, $0 \leq a1 \leq 0.3$, $0.82 \leq x1 < 1.0$, $0 < y1 \leq 0.2$, $0 < z1 \leq 0.2$, $0 < w1 \leq 0.2$, $0 \leq v1 \leq 0.1$, and
   $M^1$ is one more doping elements selected from the group consisting of W, Cu, Fe, V, Cr, Ti, Zr, Zn, Al, In, Ta, Y, In, La, Sr, Ga, Sc, Gd, Sm, Ca, Ce, Nb, Mg, B, and Mo.

3. The lithium secondary battery according to claim 1,

   wherein the second positive electrode active material includes a second lithium transition metal oxide represented by Formula 2 below:

   [Formula 2] $\qquad Li_{1+a2}Ni_{x2}Co_{y2}Mn_{z2}Al_{w2}M^2_{v2}O_2$

   in Formula 2 above, $0 \leq a2 \leq 0.3$, $0.82 \leq x2 < 1.0$, $0 < y2 \leq 0.2$, $0 < z2 \leq 0.2$, $0 < w2 \leq 0.2$, $0 \leq v2 \leq 0.1$, and
   $M^2$ is one or more doping elements selected from the group consisting of W, Cu, Fe, V, Cr, Ti, Zr, Zn, Al, In, Ta, Y, In, La, Sr, Ga, Sc, Gd, Sm, Ca, Ce, Nb, Mg, B, and Mo.

4. The lithium secondary battery according to claim 1, wherein $R_n$ is 0.6 Ω or less.

5. The lithium secondary battery according to claim 1, wherein the average particle diameter ($D_{50}$) of the first positive electrode active material is 6 μm to 12 μm.

6. The lithium secondary battery according to claim 1, wherein the average particle diameter ($D_{50}$) of the second positive electrode active material is 1.5 μm to 5 μm.

7. The lithium secondary battery according to claim 1, wherein the first positive electrode active material includes a first lithium transition metal oxide and a first coating layer disposed on a surface of particles of the first lithium transition metal oxide and including 1.5 mol% to 5 mol% cobalt (Co).

8. The lithium secondary battery according to claim 1, wherein the second positive electrode active material includes a second lithium transition metal oxide and a second coating layer disposed on a surface of particles of the second lithium transition metal oxide and including 0.2 mol% to 2.5 mol% cobalt (Co).

9. The lithium secondary battery according to claim 1, wherein the first positive electrode active material includes a first lithium transition metal oxide and a first coating layer including cobalt (Co) on a surface of particles of the first transition metal oxide,

the second positive electrode active material includes a second lithium transition metal oxide and a second coating layer including cobalt (Co) on a surface of particles of the second lithium transition metal oxide, and
the first coating layer includes a larger amount of cobalt than that in the second coating layer.

10. The lithium secondary battery according to claim 1, wherein the first positive electrode active material and the second positive electrode active material are included in a weight ratio of 80:20 to 40:60.

11. The lithium secondary battery according to claim 1, wherein the negative electrode includes a carbon-based negative electrode active material, and
the silicon-based negative electrode active material and the carbon-based negative electrode active material are included in a weight ratio of 1:99 to 30:70.

12. A method of manufacturing a lithium secondary battery, the method comprising:mixing a first positive electrode active material in distilled water to perform a first rinsing, followed by a drying (S1);

mixing a second positive electrode active material in distilled water to perform a second rinsing, followed by a drying (S2);
applying a positive electrode slurry including the first positive electrode active material and the second positive electrode active material onto a positive electrode collector to manufacture a positive electrode (S3);
manufacturing a negative electrode including a silicon-based negative electrode active material (S4); and
manufacturing a lithium secondary battery including the positive electrode, the negative electrode, and an electrolyte(S5),
wherein the first rinsing is performed at a higher temperature than that for the second rinsing,
an average article diameter ($D_{50}$) of the first positive electrode active material is larger than that of the second positive electrode active material,
the first positive electrode active material and the second positive electrode active material include single-particle type particles, and
the lithium secondary battery has an interfacial resistance factor (IRF) value of 1 to 1.4, defined by Equation 1 below:

[Equation 1]

$$IRF = \frac{R_p}{R_n}$$

in Equation 1 above, $R_n$ [Ω] refers to an interfacial resistance of the negative electrode measured after 100 cycles of charge/discharge are performed for the lithium secondary battery manufactured using the negative electrode, and
$R_p$ [Ω] refers to an interfacial resistance of the positive electrode measured after 100 cycles of charge/discharge are performed for the lithium secondary battery manufactured using the positive electrode.

13. The method according to claim 12, wherein the first rinsing is performed at 20 °C to 40 °C.

14. The method according to claim 12, wherein the second rinsing is performed at 3 °C to 18 °C.

15. The method according to claim 12, wherein the first rinsing is performed by mixing the first positive electrode active material in distilled water in an amount of 50 wt% to 70 wt% based on a total weight of the distilled water.

16. The method according to claim 12, wherein the second rinsing is performed by mixing the second positive electrode active material in distilled water in an amount of 65 wt% to 85 wt% based on a total weight of the distilled water.

[FIG. 1]

```
┌─────────────────────────────────────┐
│   MIXING FIRST POSITIVE ELECTRODE    │
│  ACTIVE MATERIAL IN DISTILLED WATER  │ ～ S1
│   TO PERFORM FIRST RINSING, FOLLOWED │
│            BY DRYING                  │
└─────────────────────────────────────┘
                  ↓
┌─────────────────────────────────────┐
│   MIXING SECOND POSITIVE ELECTRODE   │
│  ACTIVE MATERIAL IN DISTILLED WATER  │ ～ S2
│  TO PERFORM SECOND RINSING, FOLLOWED │
│            BY DRYING                  │
└─────────────────────────────────────┘
                  ↓
┌─────────────────────────────────────┐
│  APPLYING POSITIVE ELECTRODE SLURRY  │
│ INCLUDING FIRST AND SECOND POSITIVE  │
│  ELECTRODE ACTIVE MATERIALS ONTO     │ ～ S3
│  POSITIVE ELECTRODE COLLECTOR TO     │
│  MANUFACTURE POSITIVE ELECTRODE      │
└─────────────────────────────────────┘
                  ↓
┌─────────────────────────────────────┐
│ MANUFACTURING NEGATIVE ELECTRODE     │
│  INCLUDING SILICON-BASED NEGATIVE    │ ～ S4
│     ELECTRODE ACTIVE MATERIAL        │
└─────────────────────────────────────┘
                  ↓
┌─────────────────────────────────────┐
│  MANUFACTURING LITHIUM SECONDARY     │
│    BATTERY INCLUDING POSITIVE        │
│ ELECTRODE, NEGATIVE ELECTRODE,       │ ～ S5
│   ELECTROLYTE, AND SEPARATOR         │
└─────────────────────────────────────┘
```

## INTERNATIONAL SEARCH REPORT

| International application No. |
| --- |
| **PCT/KR2024/020868** |

| A. | CLASSIFICATION OF SUBJECT MATTER |
| --- | --- |

**H01M 4/36**(2006.01)i; **H01M 4/525**(2010.01)i; **H01M 4/505**(2010.01)i; **H01M 4/48**(2010.01)i; **H01M 4/38**(2006.01)i;
**H01M 4/587**(2010.01)i; **H01M 4/62**(2006.01)i; **H01M 4/139**(2010.01)i; **H01M 10/052**(2010.01)i

According to International Patent Classification (IPC) or to both national classification and IPC

| B. | FIELDS SEARCHED |
| --- | --- |

Minimum documentation searched (classification system followed by classification symbols)

H01M 4/36(2006.01); H01M 10/052(2010.01); H01M 4/131(2010.01); H01M 4/505(2010.01); H01M 4/525(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차전지(lithium secondary battery), 양극 활물질(cathode active material), 평균 입경(average diameter, D50), 바이모달(bimodal), 단입자(single particle), 계면저항(interfacial resistance), 수세 (washing), 온도(temperature)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | KR 10-2023-0140433 A (LG ENERGY SOLUTION, LTD.) 06 October 2023 (2023-10-06)<br>See claims 1 and 4; and paragraphs [0080], [0082]-[0085], [0105]-[0107], [0111], [0112], [0134], [0165] and [0167]. | 1-16 |
| A | KR 10-2022-0045813 A (LG CHEM, LTD.) 13 April 2022 (2022-04-13)<br>See claims 1 and 3; and paragraphs [0014], [0052], [0068] and [0082]-[0085]. | 1-16 |
| A | CN 103636038 A (SUMITOMO METAL MINING CO., LTD. et al.) 12 March 2014 (2014-03-12)<br>See abstract; and claims 1-13. | 1-16 |
| A | KR 10-2017-0076222 A (POSCO et al.) 04 July 2017 (2017-07-04)<br>See abstract; and claims 1-21. | 1-16 |
| A | KR 10-2022-0067638 A (SAMSUNG SDI CO., LTD.) 25 May 2022 (2022-05-25)<br>See abstract; and claims 1-20. | 1-16 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **28 March 2025** | **28 March 2025** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/020868**

| Patent document cited in search report | | | Publication date (day/month/year) | Patent family member(s) | | | Publication date (day/month/year) |
|---|---|---|---|---|---|---|---|
| KR | 10-2023-0140433 | A | 06 October 2023 | KR | 10-2651611 | B1 | 27 March 2024 |
| KR | 10-2022-0045813 | A | 13 April 2022 | CN | 115003634 | A | 02 September 2022 |
| | | | | CN | 115003634 | B | 02 April 2024 |
| | | | | EP | 4119503 | A1 | 18 January 2023 |
| | | | | EP | 4119503 | A4 | 22 November 2023 |
| | | | | JP | 2023-513521 | A | 31 March 2023 |
| | | | | JP | 7446448 | B2 | 08 March 2024 |
| | | | | KR | 10-2587970 | B1 | 10 October 2023 |
| | | | | US | 2023-0163273 | A1 | 25 May 2023 |
| | | | | WO | 2022-075755 | A1 | 14 April 2022 |
| CN | 103636038 | A | 12 March 2014 | CN | 102454992 | A | 16 May 2012 |
| | | | | CN | 103636038 | B | 21 December 2016 |
| | | | | JP | 2013-026199 | A | 04 February 2013 |
| | | | | JP | 5894388 | B2 | 30 March 2016 |
| | | | | KR | 10-2014-0039000 | A | 31 March 2014 |
| | | | | KR | 10-2019-0042102 | A | 23 April 2019 |
| | | | | KR | 10-2140969 | B1 | 04 August 2020 |
| | | | | US | 10601038 | B2 | 24 March 2020 |
| | | | | US | 11251428 | B2 | 15 February 2022 |
| | | | | US | 2014-0186709 | A1 | 03 July 2014 |
| | | | | US | 2020-0176773 | A1 | 04 June 2020 |
| | | | | WO | 2013-015007 | A1 | 31 January 2013 |
| KR | 10-2017-0076222 | A | 04 July 2017 | | None | | |
| KR | 10-2022-0067638 | A | 25 May 2022 | US | 2023-0378431 | A1 | 23 November 2023 |
| | | | | WO | 2022-108262 | A1 | 27 May 2022 |

Form PCT/ISA/210 (patent family annex) (July 2022)

**EP 4 708 391 A1**

**REFERENCES CITED IN THE DESCRIPTION**

**Patent documents cited in the description**

- KR 1020230188944

- KR 1020240151590